# EUROPÄISCHE PATENTSCHRIFT

(11) **EP 3 987 727 B1**
(45) Veröffentlichungstag und Bekanntmachung des Hinweises auf die Patenterteilung: **09.04.2025**
(21) Anmeldenummer: 20731777.7
(22) Anmeldetag: 18.05.2020
(51) Int. Cl.: H04L 12/46

(54) **VERFAHREN ZUR DATENÜBERTRAGUNG**
DATA TRANSMISSION METHOD
PROCÉDÉ DE TRANSMISSION DE DONNÉES

(30) Priorität: 23.05.2019 AT 504782019
(43) Veröffentlichungstag der Anmeldung: 27.04.2022
(73) Patentinhaber: STICHT Technologie GmbH, 4851 Gampern (AT)
(72) Erfinder: NEUDORFER, Christoph, 4870 Vöcklamarkt (AT); MERSNIK, Christian, 4800 Attnang-Puchheim (AT); HOFSTÄTTER, Matthias, 4040 Linz (AT); RATH, Stephan, 4846 Redlham (AT)
(74) Vertreter: Burger, Hannes
(86) Internationale Anmeldenummer: PCT/AT2020/060205
(87) Internationale Veröffentlichungsnummer: WO 2020/232494

(56) Entgegenhaltungen:
- WO-A1-2006/026937
- WO-A1-2018/188779
- WO-A1-2019/076847
- DE-A1- 102014 210 505

## Beschreibung

Die Erfindung betrifft ein Verfahren zur Datenübertragung in einem Datenübertragungssystem von Automationssystemen, Maschinen oder Fahrzeugen.

Ein Datenübertragungssystem, insbesondere in Form eines Bussystems, ist ein System zum Datenaustausch zwischen mehreren Teilnehmern über einen gemeinsamen Übertragungsweg.

Die DE68914065T2 offenbart Gatterverbindungselemente zur Verwendung in einem örtlichen Kommunikationsbussystem im Privatbereich, wobei das Gatterverbindungselement einen ersten und zweiten Bus verbindet. Das Gatterverbindungselement verbindet einen ersten Einleiterbus und einen zweiten Einleiterbus, welche jeweils mit Bustopologie vorliegen. Kollisionen beim gleichzeitigen Senden zweier Sendestationen werden erkannt, wobei sich die Station mit niedrigerer Priorität bei Erkennung der Doppelbelegung zurückzieht.

Die DE4033352A1 offenbart das Anbinden mehrerer lokaler Teilnetzwerke (Branch LAN) an ein lokales Netzwerk mit Fernleitung (Trunk LAN). Der Zweck ist das Anbinden mehrerer Benutzer (Geschäfte oder Gesellschaften in einem Gebäude) an eine Fernleitung, mit Unabhängigkeit und Datensicherheit in Bezug auf die eigenen Daten.

Die DE19711720A1 offenbart das Vermitteln von Datenpaketen zwischen lokalen Computernetzen und zwischen den lokalen Computernetzen und öffentlichen Netzen.

Die WO2011120562A1 offenbart eine Automatisierungskomponenten, welche in einen energiesparenden Betriebszustand versetzt werden kann.

Die DE102011077409A1 offenbart einen Verbindungsknoten für ein Kommunikationsnetz zur Fehlererkennung. Der Verbindungsknoten weist zwei Schnittstellen zur Anbindung in das Netz auf und leitet fehlerfreie Daten weiter.

Die DE102014210505A1 offenbart eine Übertragungseinheit zum Anschluss an ein erstes Bussystem, wobei die Übertragungseinheit über das erste Bussystem Nachrichten empfängt, wobei die Nachrichten als Abfolge einer ersten Bitsequenz, wenigstens eines Steuersignals und einer zweiten Bitsequenz aufgebaut sind, wobei durch die Übertragungseinheit die erste Bitsequenz einer empfangenen Nachricht an eine Verarbeitungsstation weitergeleitet wird, wobei durch die Übertragungseinheit wenigstens ein vorgegebenes Steuersignal der empfangenen Nachricht überprüft wird, wobei durch die Übertragungseinheit die zweite Bitsequenz der empfangenen Nachricht an die Verarbeitungsstation weitergeleitet wird, wenn das vorgegebene Steuersignal der empfangenen Nachricht einen vorgegebenen Wert aufweist, wobei die Übertragungseinheit an Stelle der zweiten Bitsequenz eine vorgegebene oder vorgebbare Abschluss-Bitsequenz an die Verarbeitungsstation sendet, wenn das vorgegebene Steuersignal der empfangenen Nachricht einen von dem vorgegebenen Wert abweichenden Wert aufweist.

Bei Bussystemen sind unterschiedliche Topologien bekannt, welche allesamt ihre Vor- und Nachteile haben.

Bei der Bus-Topologie sind alle Teilnehmer direkt mit demselben Übertragungsmedium verbunden, wobei ein gesendetes Datenpaket von allen Teilnehmern empfangen wird und nur der adressierte Teilnehmer bearbeiten das Datenpaket und sendet gegebenenfalls eine Antwort.

Bei Ringtopologien sind die Teilnehmer entlang eines Rings angeordnet, wobei die Teilnehmer jeweils einen Sender und Empfänger aufweisen, sodass ein Datenpaket von einem Teilnehmer zum nächsten weitergereicht wird, bis der richtige Teilnehmer das Paket erhält. Eine Antwort wird in derselben Richtung im Ring weitergegeben.

Ähnlich ist die Linientopologie, bei welcher die Teilnehmer entlang einer Linie angeordnet sind, wobei die Teilnehmer jeweils einen Sender und Empfänger aufweisen, sodass ein Datenpaket von einem Teilnehmer zum nächsten weitergereicht wird, bis der richtige Teilnehmer das Paket erhält. Eine Antwort wird in entgegengesetzter Richtung der Linie zurückgegeben.

Bei einer Sterntopologie sind alle Teilnehmer mit einer Punkt- zu-Punkt Verbindung mit einer zentralen Steuerung verbunden, mit dem Nachteil eines hohen Verkabelungsaufwandes.

Die der Erfindung zu Grunde hegende Aufgabe besteht darin, ein Verfahren zum Datenaustausch in Bussystemen von Automationssystemen, Maschinen oder Fahrzeugen zu schaffen, mit welchem man deterministische, zeitkritische Signale mit Hilfe eines Bussystems zu mehreren Teilnehmern übertragen kann. Bevorzugt werden dabei die Daten an zumindest einer Stelle zwischen der Steuerungseinheit des Bussystems und den mehreren Teilnehmern berührungslos beziehungsweise in nicht kabelgebundener Form übertragen.

Für das Lösen der Aufgabe wird ein Datenübertragungssystem zum Datenaustausch in Bussystemen von Automationssystemen, Maschinen oder Fahrzeugen vorgeschlagen, welches zumindest eine zentrale Steuerungseinheit aufweist, wobei ausgehende Datenpakete der Steuerungseinheit an unterschiedliche Teilnehmer gesendet werden wobei jedes ausgehende Datenpaket der Steuerungseinheit zumindest eine Adressinformation und zu übermittelnde Daten enthält, wobei die Steuerungseinheit zumindest einen Master des Systems abbildet und wobei das Datenübertragungssystem zumindest einen Übertragungsweg aufweist, über welchen Datenpakete von unterschiedlichen Teilnehmern an die Steuerungseinheit gesendet werden, wobei die Steuerungseinheit über den Übertragungsweg mit mehreren Kommunikationsgeräten in Datenverbindung steht, wobei jedem der Kommunikationsgeräte eine Teilnehmergruppe von Teilnehmern zugeordnet ist, wobei jede Teilnehmergruppe nur einem Kommunikationsgerät zugeordnet ist, wobei jeweils die eine Teilnehmergruppe von Teilnehmern und das zugeordnete Kommunikationsgerät durch einen Datenbus verbunden sind und wobei die Teilnehmergruppe von Teilnehmern über das jeweils zugeordnete Kommunikationsgerät am Übertragungsweg angebunden ist, welches Kommunikationsgerät zumindest die Adressinformation eines ausgehenden Datenpakets der Steuerungseinheit liest und an der Adressinformation des ausgehenden Datenpakets erkennt, ob es selbst oder ein Teilnehmer seiner Teilnehmergruppe vom ausgehenden Datenpaket angesprochen ist, wobei das ausgehende Datenpaket oder Teile davon nur an die Teilnehmergruppe von Teilnehmern weitergegeben wird, wenn diese Voraussetzung erfüllt ist, sodass das ausgehende Datenpaket von dem zumindest einen adressierten Teilnehmer bearbeitbar ist und wobei eine Antwort oder ein modifiziertes oder neues Datenpaket zumindest eines Teilnehmers der Teilnehmergruppe an das jeweils zugeordnete Kommunikationsgerät übermittelt wird und wobei das Kommunikationsgerät die Antwort oder das modifizierte oder neue Datenpaket des zumindest einen Teilnehmers puffert und in einer Zeitspanne an die Steuerungseinheit über den Übertragungsweg übermittelt, in welcher Zeitspanne kein anderes der Kommunikationsgeräte Datenpakete an die Steuerungseinheit übermittelt.

Der Übertragungsweg zur Steuerungseinheit ist vom Bussystem der Teilnehmer der Teilnehmergruppe durch das Kommunikationsgerät getrennt. Der Datenaustausch zwischen dem Übertragungsweg und dem Bussystem der Teilnehmer erfolgt daher über das Kommunikationsgerät.

Die Datenübertragung von der Steuerungseinheit zu den Kommunikationsgeräten und von den Kommunikationsgeräten zur Steuerungseinheit kann zumindest abschnittsweise über denselben Übertragungsweg erfolgen, sodass ausgehende Datenpakete der Steuerungseinheit und ausgehende Datenpakete der Kommunikationsgeräte nicht zur selben Zeit gesendet werden können. Es sind aber auch getrennte Übertragungswege von der Steuerungseinheit zu den Kommunikationsgeräten und von den Kommunikationsgeräten zur Steuerungseinheit möglich, wobei alle Kommunikationsgeräte Daten vom von der Steuerungseinheit ausgehenden Übertragungsweg erhalten und alle Kommunikationsgeräte Daten an den zur Steuerungseinheit hinführenden Übertragungsweg übergeben. Durch diese Ausgestaltung kann das Senden von Datenpaketen der Steuerungseinheit an die Kommunikationsgeräte und das Senden von Datenpaketen der Kommunikationsgeräte an die Steuerungseinheit zeitgleich über zwei unterschiedliche Übertragungswege erfolgen, beispielsweise indem die Steuerungseinheit Datenpakete in einem anderen Frequenzbereich empfängt als sendet. Dies kann sowohl bei Funkübertragung als auch bei einem in einem Leiter geleiteten Signal erfolgen. Getrennte Übertragungswege können auch vorliegen, indem der Übertragungsweg zu den Kommunikationsgeräten als ein erster Leiter oder ein erstes Leiternetz ausgeführt ist und der Übertragungsweg von den Kommunikationsgeräten zur Steuerungseinheit als ein zweiter Leiter oder ein zweites Leiternetz ausgeführt ist, beispielsweise durch Verwendung von zumindest zweipoligen Kabeln. Eine bidirektionale Nutzung optischer Fasern führt ebenfalls dazu, dass zeitgleich Daten von der Steuerungseinheit an die Kommunikationsgeräte und von den Kommunikationsgeräten zur Steuerungseinheit sendbar sind.

Bevorzugt sendet die Steuerungseinheit Zeitfenster-Informationen für die Datenübertragung am Übertragungsweg an die Kommunikationsgeräte, wobei jedes Kommunikationsgerät daraus die Information erhält, in welcher Zeitspanne es Datenpakete an die Steuerungseinheit übermitteln kann.

Bevorzugt sendet die Steuerungseinheit ein Taktsignal bzw. Clock-Signal zur Synchronisation der Kommunikationsgeräte.

Bevorzugt enthält das ausgehende Datenpaket der Steuerungseinheit Adressinformationen zumindest eines Kommunikationsgeräts und Adressinformationen zumindest eines Teilnehmers.

Das Clock-Signal dient zur laufenden Synchronisation der Steuerungseinheit und der Kommunikationsgeräte und/oder deren Teilnehmer, was insbesondere bei bewegten Kommunikationsgeräten und/oder Teilnehmern vorteilhaft ist, da es aufgrund der Positionsänderung zu einer Laufzeitänderung des Signals kommen kann.

Aus dem Clock-Signal oder einer zusätzlichen Zeitfensterinformation im Datenpaket ermitteln die Kommunikationsgeräte die ihnen zugewiesenen Zeitfenster, in denen sie Datenpakete an die Steuerungseinheit senden können.

Bevorzugt wird das Clock-Signal oder ein anderes geeignetes Merkmal oder eine andere Information der Datenpakete der Steuerungseinheit zur Synchronisation der Teilnehmer des Bussystems verwendet.

Bei den Adressinformationen der Kommunikationsgeräte handelt es sich bevorzugt um eindeutige Adressinformationen, sodass jedes Kommunikationsgerät am Übertragungsweg von der Steuerungseinheit eindeutig adressierbar ist.

Bei den Adressinformationen der Teilnehmer kann es sich um relative Adressinformationen handeln. Mehrere Teilnehmer können dabei dieselbe Kennung aufweisen, wobei die Teilnehmer nur durch ihre Reihenfolge entlang des physischen Busses unterscheidbar sind. Dabei kann die Adressinformation die Art des Teilnehmers enthalten und dessen Reihenfolge relativ zu Teilnehmern derselben Art innerhalb einer Teilnehmergruppe von Teilnehmern, welche an einem Kommunikationsgerät angebunden ist. Bei dieser Variante wird das Kommunikationsgerät direkt adressiert und die einem Kommunikationsgerät zugeordneten Teilnehmer indirekt. Da jede Teilnehmergruppe nur einem Kommunikationsgerät zugeordnet ist, kann jeder Teilnehmer adressiert werden, solange der Steuerung bekannt ist, welche Teilnehmer in welcher Reihenfolge an welchem Kommunikationsgerät vorliegen.

Bevorzugt haben aber auch die Teilnehmer eindeutige Adressen. Dies bedeutet, dass jeder Teilnehmer im gesamten Bussystem eine eindeutige Kennung oder Identifikationsnummer aufweist.

Bevorzugt kommunizieren die Teilnehmer einer Teilnehmergruppe über eine Ringtopologie mit dem Kommunikationsgerät. Dies bedeutet, dass das Datenpaket vom Kommunikationsgerät an den ersten Teilnehmer der Teilnehmergruppe übergeben wird und von jedem Teilnehmer an den jeweils nachfolgenden Teilnehmer, wobei jeder Teilnehmer die an ihn adressierten Daten bearbeitet und gegebenenfalls Daten zum Datenpaket hinzufügt oder Daten des Datenpakets ändert, bis der letzte Teilnehmer erreicht ist, wobei dieser das Datenpaket zurück das Kommunikationsgerät übermittelt. Alternativ ist auch eine Linientopologie möglich, mit dem Unterschied, dass das Datenpaket vom letzten Teilnehmer retour über die vorgereihten Teilnehmer an das Kommunikationsgerät übergeben wird.

Bevorzugt kommunizieren die Kommunikationsgeräte über eine Bustopologie mit der Steuerungseinheit. Alle Kommunikationsgeräte sind dabei direkt mit demselben Übertragungsmedium verbunden, wobei ein gesendetes Datenpaket von allen Kommunikationsgeräten empfangen wird und nur das adressierte Kommunikationsgerät bearbeitet dieses, bzw. leitet dieses an seine Teilnehmergruppe von Teilnehmern weiter. Die Steuerungseinheit gibt dabei ein Clock-Signal und Zeitfenster vor, zu welchen die Kommunikationsgeräte Antworten senden dürfen, um zu verhindern, dass Datenpakete gleichzeitig gesendet werden bzw. kollidieren. Ein von der Steuerungseinheit gesendetes Datenpaket enthält bevorzugt Daten für mehrere Kommunikationsgeräte bzw. deren Teilnehmer, wobei in diesem Fall den jeweiligen Daten innerhalb des Datenpakets die entsprechende Aderessinformationen der Kommunikationsgeräte zugeordnet sind.

Bevorzugt sind in der Steuerungseinheit X-Master des Systems softwaretechnisch abgebildet, wobei jeder Master mit nur einem Kommunikationsgerät kommuniziert.

Bei einem Bussystem sind grundsätzlich nicht mehrere Master erforderlich. Bei der gegenständlichen Erfindung werden mehrere Master dann verwendet, wenn sich die Adressen der Kommunikationsgeräte durch einen VLAN-Tag unterscheiden. Dabei werden dann die Daten der einzelnen Kommunikationsgeräte durch den VLAN-Tag differenziert und jedes Kommunikationsgerät empfängt nur jene Daten die für es bzw. dessen Teilnehmer bestimmt sind. Diese VLAN-Tags lassen sich im Bussystem abbilden, wenn ein gesamter Busstrang einen eigenen VLAN-Tag erhält. Jeder Busstrang braucht in weiterer Folge einen eigenen Master, sodass ein Multi Master System resultiert. Die Master können in physischer Form vorliegen, indem jeder Master eine Steckkarte bzw. eine Netzwerkkarte ist. Die Master liegen aber bevorzugt in digitaler Form also software-implementiert vor.

Als Busstrang ist der jeweils an ein Kommunikationsgerät angeschlossenen Bus zu verstehen, welcher dieses und die Teilnehmer seiner Teilnehmergruppe verbindet.

Bevorzugt sind eine Vielzahl von Kommunikationsgeräten vorhanden und eine Vielzahl von Mastern in der Steuerungseinheit softwaretechnisch abgebildet. Bevorzugt hat jeder Master und jedes Kommunikationsgerät eine eindeutige Adresse, um diesen Datenpakete oder Bestandteile von Datenpaketen zuweisen zu können.

Bevorzugt liegt der Übertragungsweg ausgehend von der Steuerungseinheit als ein Lichtwellenleiter oder elektrischer Leiter vor. Bevorzugt wird der elektrische Leiter auf mehrere Einzelleiter verzweigt, sodass jeder der verzweigten elektrische Leiter dasselbe Signal leitet. Bevorzugt wird der Lichtwellenleiter auf mehrere Lichtwellenleiter verzweigt, wobei das ausgehende Signal der Steuerungseinheit von jedem der verzweigten Lichtwellenleiter geleitet wird und die von den Kommunikationsgeräten gesendeten Signale von den verzweigten Lichtwellenleitern in den Lichtwellenleiter zur Steuerungseinheit eingekoppelt werden und somit über eine Leitung zur Steuerungseinheit retour gelangen.

Den Kommunikationsgeräten kann ein Signalverstärker oder ein Signalwandler vorgeschalten sein, oder diese können einen solchen aufweisen.

Die Kommunikation zwischen der zentralen Steuerung und den Kommunikationsgeräten und zwischen den Kommunikationsgeräten und deren Teilnehmergruppe erfolgt bevorzugt mit unterschiedlichen Übertragungsmedien.

Das Übertragungsmedium zwischen der zentralen Steuerung und den Kommunikationsgeräten kann kabellos sein, beispielsweise über Funk oder kabelgebunden sein, beispielsweise als Lichtwellenleiter oder elektrischer Leiter vorliegen.

Das Übertragungsmedium zwischen den Kommunikationsgeräten und den Teilnehmern ist bevorzugt kabelgebunden, insbesondere in Form von elektrischen Leitern.

Bevorzugt sind die Teilnehmer einer Teilnehmergruppe und deren Kommunikationsgerät gemeinsam auf einem beweglichen Element des Automationssystems, der Maschine oder des Fahrzeugs untergebracht. Bevorzugt handelt es sich beim beweglichen Element um Transportwägen bzw. bewegte Teilehalter eines Transportsystems oder um bewegliche Komponenten von Maschinen, welche entlang einer Führung bewegt werden.

Bevorzugt erfolgt die Übertragung von Daten zwischen den Kommunikationsgeräten und dem Übertragungsmedium kabellos oder berührungslos.

Bevorzugt liegt zumindest ein Teilbereich des Übertragungsweges als Leiter vor, bei welchem ein Signal an einer beliebigen Position entlang seiner Längserstreckung auskoppelbar und einkoppelbar bzw. übertragbar ist.

Bevorzugt liegt zumindest ein Teil des Übertragungsweges als ein Hohlwellenleiter, insbesondere Schlitzhohlwellenleiter, oder ein Seitenlichtwellenleiter bzw. eine Seitenlichtfaser vor, sodass das Signal für das Kommunikationsgerät seitlich entlang des Hohlwellenleiters oder der Seitenlichtfaser eingekoppelt, ausgekoppelt bzw. übertragen werden kann.

Bevorzugt sind die Teilnehmer je einer Teilnehmergruppe und deren Kommunikationsgerät gemeinsam an einer beweglichen Einheit einer Automationsanlage angebracht, wobei die Automationsanlage mehrere derartige bewegliche Einheiten aufweist, wobei die beweglichen Einheiten entlang einer gemeinsamen Führung bewegt werden, wobei entlang der Führung zumindest ein Übertragungselement vorliegt, sodass entlang der Erstreckung des Übertragungselements in Transportrichtung der beweglichen Einheiten Signale zwischen dem Übertragungselement und Kommunikationsgeräten der beweglichen Einheiten übertragen werden können, wobei jede Teilnehmergruppe je zumindest einen Motor, insbesondere Servomotor, zum Verfahren der beweglichen Einheiten entlang der Führung umfasst. Bevorzugt weisen die beweglichen Einheiten zudem zumindest einen Sensor zum Erfassen der Position der beweglichen Einheit entlang der Führung auf. Ein solcher Sensor kann verwendet werden um einen auftretenden Schlupf, also eine Abweichung der Istposition im System und der durch den Motorencoder aufgezeichneten Position, zu korrigieren. Ein solcher Schlupf kann aus einem durchrutschenden Reibantrieb resultieren. Falls man lange Distanzen kostengünstig überbrücken möchte und die exakte Kenntnis der Position der beweglichen Einheit innerhalb der Strecke bzw. eines Moduls der Strecke nicht benötigt wird, kann man auf einen zusätzlichen Sensor, welcher die Position der beweglichen Einheit entlang der Strecke erfasst, verzichten und nur die über die Daten des Motorencoders ermittelte Position der beweglichen Einheit heranziehen. Der Motor und/oder Sensor sind dabei bevorzugt selbst Teilnehmer der jeweiligen Teilnehmergruppe, oder werden durch einen solchen Teilnehmer angesteuert oder ausgelesen.

Die Erfindung wird an Hand von Zeichnungen veranschaulicht:
- Fig. 1:: zeigt schematisch eine beispielhafte Topologie eines gegenständlichen Datenübertragungssystems.
- Fig. 2:: veranschaulicht das Senden von ausgehenden Datenpaketen der Steuerungseinheit eines gegenständlichen Datenübertragungssystems.
- Fig. 3:: veranschaulicht das Senden von Datenpaketen an die Steuerungseinheit eines gegenständlichen Datenübertragungssystems.
- Fig. 4:: veranschaulicht das Senden von Datenpaketen an die Steuerungseinheit eines gegenständlichen Datenübertragungssystems mit optischer Signalübertragung.
- Fig. 5:: veranschaulicht ein beispielhaftes gegenständliches Datenübertragungssystem mit beweglichen Einheiten.
- Fig. 6:: veranschaulicht ein weiteres beispielhaftes gegenständliches Datenübertragungssystem mit beweglichen Einheiten.
- Fig. 7:: veranschaulicht ein weiteres beispielhaftes gegenständliches Datenübertragungssystem mit beweglichen Einheiten.
- Fig. 8:: veranschaulicht ein weiteres beispielhaftes gegenständliches Datenübertragungssystem mit beweglichen Einheiten.
- Fig. 9:: veranschaulicht Anwendungsbeispiele von gegenständlichen Datenübertragungssystemen mit beweglichen Einheiten.
- Fig. 10:: veranschaulicht eine beispielhafte bewegliche Einheit einer beispielhaften Anwendung eines erfindungsgemäßen Datenübertragungssystems.

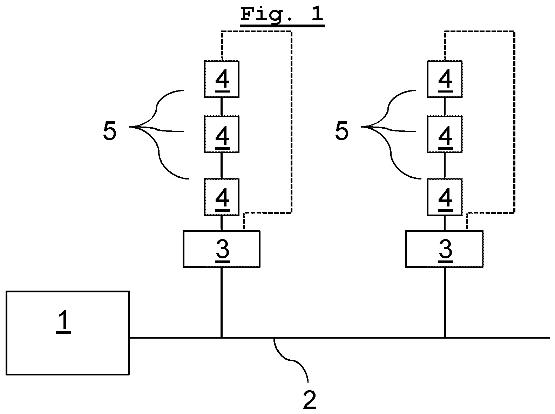

Fig. 1 veranschaulicht eine mögliche Topologie, welche bei der gegenständlichen Erfindung zur Anwendung kommen kann.

Das System umfasst eine Steuerungseinheit 1, welche über einen Übertragungsweg 2 mit mehreren Kommunikationsgeräten 3 in Datenverbindung steht, sodass die Kommunikationsgeräte 3 Daten von der Steuerungseinheit 1 erhalten und an diese senden können. Das Empfangen und Senden kann bevorzugt über ein und denselben Übertragungsweg erfolgen, es können aber auch getrennte Übertragungswege für das Senden und Empfangen vorgesehen sein. Bevorzugt liegt der Übertragungsweg in leitergebundener Form vor, also als elektrischer Leiter oder als Lichtwellenleiter. Eine drahtlose Kommunikation mit den Kommunikationsgeräten 3 ist auch möglich, aber weniger bevorzugt, aufgrund der derzeit noch geringeren Übertragungsraten, der längeren Signallaufzeit und der größeren Gefahr von Signalstörungen. Insbesondere bei Anwendungen, bei welchen eine synchronisierte Ansteuerung von Teilnehmern benötigt wird, hat sich eine Kommunikation über Funk aufgrund der Latenzzeiten von vier oder mehr Millisekunden als ungeeignet erwiesen. Gegebenenfalls ist eine Implementierung mit Funkkommunikation durch den Fortschritt der Technik im Bereich der Funktechnologie möglich, beispielsweise unter Nutzung von Frequenzen im höheren Gigaherzbereich oder durch Nutzung von Frequenzbändern im Gigaherzbereich und den damit verbundenen kürzeren Latenzzeiten. Zurzeit werden bei Funkanwendungen im Automationsbereich meistens Frequenzen im ISM Band verwendet (WLAN, Bluetooth, ...). Diese Frequenzbänder liegen unter anderem im Bereich von 2.4GHz und 5GHz. Speziell aus der 5G Technologie könnten sich Varianten mit ausreichend geringer Latenz ergeben. Die Frequenzbänder von 5G werden bei 2GHz und bei 3.4GHz bis 3.7GHz liegen. Eine weitere neue Variante, mit möglicherweise ausreichend geringer Latenz, arbeitet mit Frequenzen im Bereich von 60GHz.

Für die gegenständliche Erfindung wird eine Zykluszeit von 2 ms oder kleiner bevorzugt. Die Latenzzeit soll im einstelligen µs Bereich liegen oder kleiner sein.

Die Kommunikationsgeräte 3 weisen zumindest ein Empfangs- und Sendemodul auf. Die Kommunikationsgeräte 3 können auch mehrere Empfangs- und Sendemodule aufweisen, beispielsweise können diese Kabelsteckplätze und Funkempfänger/-sender aufweisen.

Die Kommunikationsgeräte 3 und die Steuerungseinheit 1 sind über eine Bus-Topologie verbunden, sodass jedes Kommunikationsgerät 3 Signale der Steuerungseinheit 1 in identer Weise und bis auf Laufzeitunterschiede auch zeitgleich erhält. Beispielsweise sendet die Steuerungseinheit 1 ein Funksignal, dass von allen Kommunikationsgeräten 3 empfangen wird. Bevorzugt ist an der Steuerungseinheit 1 ein Leiter angeschlossen, der auf alle Kommunikationsgeräte 3 aufgezweigt wird. Alternativ können auch mehrere Leiter an der Steuerungseinheit 1 angeschlossen sein, wobei jeder Leiter dasselbe Signal ausgehend von der Steuerungseinheit 1 enthält, beispielsweise indem die Leiter als elektrische Leiter in der Steuerungseinheit kurzgeschlossen sind. Beispielsweise könnte je ein Leiter von der Steuerungseinheit 1 zu je einem Kommunikationsgerät 3 oder einer Teilgruppe von Kommunikationsgeräten 3 führen.

An den Kommunikationsgeräten 3 sind ein oder bevorzugt mehrere Teilnehmer 4 durch Leiter angeschlossen, wobei die Kommunikation der Teilnehmer 4 mit ihrem Kommunikationsgerät 3 über einen Bus erfolgt.

Das Kommunikationsgerät 3 weist somit eine erste Schnittstelle zur Kommunikation mit der Steuerungseinheit 1 und eine zweite Schnittstelle zur Kommunikation mit den Teilnehmern 4 seiner Teilnehmergruppe 5 auf. Im Kommunikationsgerät 3 kann eine Signalumwandlung stattfinden, beispielsweise von einem Funksignal der Steuerungseinheit 1 auf ein leitergebundenes Signal zu den Teilnehmern 4. Bevorzugt erfolgt eine Umwandlung von einem optischen Signal der Steuerungseinheit 1 auf ein elektrisches leitergebundenes Signal zu den Teilnehmern 4. Eine Umwandlung des Signals kann auch durch einen zusätzlichen Signalwandler vor oder nach dem Kommunikationsgerät 3 erfolgen. Wie dargestellt sind die Teilnehmer 4 und das Kommunikationsgerät 3 bevorzugt durch eine Linientopologie (ohne die strichlierte Linie) oder durch eine Ringtopologie (strichlierte Linie für den Rückleiter) verbunden.

In der Steuerungseinheit 1 kann je ein Master pro Kommunikationsgerät 3 als Programm bzw. als Software implementiert sein, wobei jeder Master Datenpakete über den Übertragungsweg 2 an die Adresse seines Kommunikationsgerätes 3 sendet. Bevorzugt weist jeder Master eine eindeutige Adresse, in Form einer Nummer oder eines Codes auf. Die Software der Steuerungseinheit 1 sieht vor, dass immer nur ein Master zu einer Zeit Datenpakete sendet, sodass sich die Datenpakete unterschiedlicher Master nicht zeitlich überlappen.

Jedes Kommunikationsgerät 3 versieht die von ihm zurückgesendeten Datenpakete mit der Adresse des Masters, sodass die Software der Steuerungseinheit 1 die Datenpakete der Kommunikationsgeräte 3 den jeweiligen Mastern zuordnen kann.

Bevorzugt werden die an die Kommunikationsgeräte 3 zu versendenden Datenpakete der Steuerungseinheit 1 gesammelt als ein Gesamtpaket versendet, in welchem die einzelnen Datenpakete mit ihren Adressinformationen des jeweiligen Kommunikationsgeräts 3 enthalten sind. Die einzelnen Kommunikationsgeräte 3 entnehmen aus dem Gesamtpaket das jeweils ihnen zugeordnete Datenpaket. Bevorzugt sendet die Steuerungseinheit 1 die Gesamtpakete in einem festen Takt mit einem festen Zeitfenster. Dies erleichtert die Synchronisation der Teilnehmer 4 im Bussystem durch die Steuerungseinheit 1. Bevorzugt ist das Zeitfenster der Steuerungseinheit 1 für das Senden der Gesamtpakete so dimensioniert, dass alle zu einem Zeitpunkt zu sendenden Datenpakete innerhalb eines Zeitfensters gesendet werden und nicht auf mehrere Zeitfenster aufgeteilt werden müssen. Die Auslastung des Zeitfensters zum Senden der Gesamtpakete liegt somit bevorzugt stets unter 100%.

In der Zeit zwischen den Zeitfenstern werden Datenpakete von den Kommunikationsgeräten 3 an die Steuerungseinheit 1 zurückgesendet.

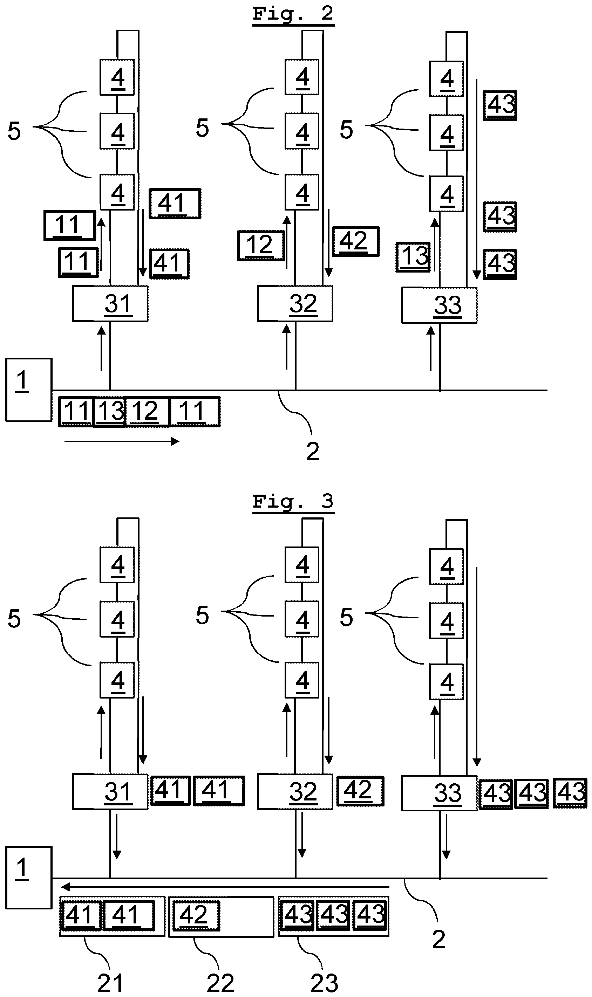

Fig. 2 veranschaulicht den Vorgang beim Übertragen von Daten von der Steuerungseinheit 1 zu den Teilnehmern 4. Die Steuerungseinheit 1 sendet Datenpakete 11, 12, 13, welche jeweils eine Adressinformation enthalten, die von den Kommunikationsgeräten 3 lesbar ist. Bevorzugt werden die in einem Zeitfenster zu versendenden Datenpakete 11, 12, 13 als ein Gesamtpaket versendet, in welchem die einzelnen Datenpakete ohne zeitliche Überlappung aneinandergereiht sind.

Die Datenpakete 11, 12, 13 gelangen an alle Kommunikationsgeräte 3. Jedes Kommunikationsgerät 3 leitet nur die an sich adressierten Datenpakete 11, 12, 13 oder Teile dieser Datenpakete, welche für die Teilnehmer 4 seiner Teilnehmergruppe 5 bestimmt sind, an seine Teilnehmer 4 weiter. Bevorzugt werden von den Kommunikationsgeräten 3 Daten, welche nur vom Kommunikationsgerät 3 benötigt werden, wie die Adressinformation des Kommunikationsgeräts 3 und/oder Zeitfensterinformationen, aus dem Datenpaket 11, 12, 13 entfernt, bevor dieses an die Teilnehmer 4 der Teilnehmergruppe 5 des jeweiligen Kommunikationsgeräts 3 weitergegeben werden. Vorteilhaft kann ein Taktsignal oder eine andere geeignete Zeitinformation der Steuerungseinheit 1 von den Kommunikationsgeräten 3 an die Teilnehmer 4 weitergegeben werden, um die Synchronisation von Teilnehmern 4 unterschiedlicher Kommunikationsgeräte 3 zu ermöglichen. Das jeweilige Datenpaket 11, 12, 13 oder Teile davon werden vom Kommunikationsgerät 3 an die Teilnehmer 4 weitergereicht. Bevorzugt wird das Datenpaket 11, 12, 13 oder Teile davon an den ersten an das Kommunikationsgerät 3 angeschlossenen Teilnehmer 4 übergeben und dann von Teilnehmer 4 zu Teilnehmer 4 weitergereicht.

Die Teilnehmer 4 bearbeiten die an sie adressierten Daten, beispielsweise indem sie Befehle ausführen, Daten des Datenpakets 11, 12, 13 ändern oder Daten, wie beispielsweise Sensordaten dem Datenpaket 11, 12, 13 hinzufügen. Die von den Teilnehmern 4 modifizierten oder eventuell auch neu erstellte Datenpakete 41, 42, 43 werden an das jeweilige Kommunikationsgerät 3 übermittelt bzw. von Teilnehmer 4 zu Teilnehmer 4 bis zu diesem weitergegeben.

Beispielsweise werden das erste und das letzte Datenpaket der dargestellten Sequenz als Datenpaket 11 gesendet, welches die Adressinformation für ein erstes Kommunikationsgerät 31 enthält. Das zweite Datenpaket 12 ist an das Kommunikationsgerät 32 adressiert und das dritte Datenpaket 13 and das Kommunikationsgerät 33. Die Datenpakete 11, 12, 13 werden bevorzugt aufeinanderfolgend innerhalb eines Zeitintervalls als Gesamtpaket gesendet. Die Datenpakete 11, 12, 13 können gleicher oder unterschiedlicher Länge sein. Die Reihenfolge in welcher die Datenpakete innerhalb des Gesamtpakets an die Kommunikationsgeräte 31, 32, 33 gesendet werden kann gleichbleibend oder variabel sein.

Das erste Kommunikationsgerät 31 leitet das erste Datenpaket 11 und das letzte Datenpaket 11 der dargestellten Sequenz an die Teilnehmer 4 seiner Teilnehmergruppe 5 weiter, wobei dies bevorzugt unmittelbar nach Erhalt des jeweiligen Datenpakets 11 erfolgt. Die Teilnehmer 4 geben die Datenpakete 11 im Kreis und verändern diese, sodass modifizierte Datenpakete 41 an das Kommunikationsgerät 31 zurückgelangen und in diesem gepuffert, also zwischengespeichert, werden.

Wie beim dritten Kommunikationsgerät 33 veranschaulicht, ist es auch möglich, dass die Teilnehmer 4 von sich aus Datenpakete 43 erstellen, beispielsweise wenn dies aufgrund eines Sensormesswertes angezeigt ist.

Fig. 3 veranschaulicht den Vorgang beim Übertragen von Daten von den Teilnehmern 4 zur Steuerungseinheit 1. Die in den Kommunikationsgeräten 3 gepufferten bzw. zwischengespeicherten Datenpakete 41, 42, 43 werden zeitlich nicht überlappend am Übertragungsweg 2 an die Steuerungseinheit 1 übertragen. Wie dargestellt kann vorgesehen sein, dass jedes Kommunikationsgerät 3 in einem ihm bekannten Zeitfenster alle (oder so viele wie im Zeitfenster möglich) gepufferten Datenpakete an die Steuerungseinheit 1 übermittelt. Die Zeitfenster können konstanter oder variabler Länge sein. Die Reihenfolge der zugewiesenen Zeitfenster 21, 22, 23 kann konstant oder variabel sein. Der zeitliche Abstand und der Takt der Zeitfenster können konstant oder variabel sein.

Als Alternative (zumindest bei einem Übertragungsweg in Form von Funk oder einem elektrischen Leiter) zu einem Zeitfensterverfahren sind auch andere Verfahren denkbar, um das gleichzeitige Senden von Daten auf einem Übertragungsweg 2 zu vermeiden, beispielsweise Token-Verfahren, Handshakeverfahren, Aktivitätsüberwachung und Vielfachzugriff (Carrier Sense Multiple Access, CSMA) bevorzugt in Verbindung mit Kollisionserkennung (Collision Detection, CD). Diese Verfahren setzen aber meist voraus, dass die Kommunikationsgeräte 3 auch untereinander verbunden sind, daher, dass die Kommunikationsgeräte 3 auch die Datenpakete 41, 42, 43 anderer Kommunikationsgeräte 3 empfangen oder ein zusätzlicher Übertragungsweg zwischen den Kommunikationsgeräten 3 eingerichtet ist, über welchen ein Token oder ein Handshake-Signal übermittelbar ist.

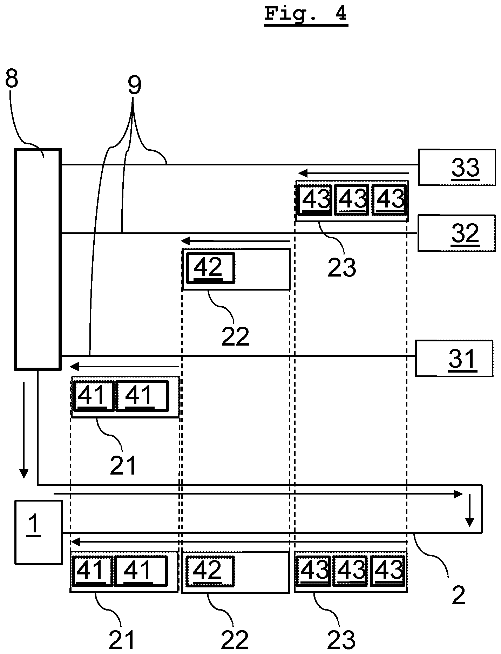

Fig. 4 veranschaulicht den Vorgang beim Übertragen von Daten von den Teilnehmern 4 zur Steuerungseinheit 1, wenn der Übertragungsweg 2 in Form von Lichtwellenleitern vorliegt und die Lichtwellenleiter zu den Teilnehmern 4 an einem Verteiler 8, in diesem Fall optischen Verteiler, bevorzugt einem passiven optischen Verteiler, angeschlossen sind. Der Verteiler 8 leitet das Signal der Steuerungseinheit, welches an der einen Faser am Eingang des Verteilers 8 anliegt an alle Fasern am Ausgang des Verteilers 8, sodass das Signal der Steuerungseinheit an alle Kommunikationsgeräte 3 gelangt. Die Fasern am Ausgang stellen Einzelleiter 9 dar, welche vom Übertragungsweg 2 oder besser gesagt vom von der Steuerungseinheit 1 ausgehenden Übertragungsweg 2, insbesondere ausgehenden Leiter, abgezweigt werden.

In umgekehrter Richtung werden einkommende Signale von den Fasern am Ausgang des Verteilers 8 nur in die eine Faser am Eingang des Verteilers 8 eingekoppelt, nicht jedoch in die anderen Fasern am Ausgang des Verteilers 8. Es besteht somit keine direkte Datenverbindung der Kommunikationsgeräte 3 über den Übertragungsweg 2. Die Kommunikationsgeräte 3 erhalten daher die von dem jeweils anderen Kommunikationsgeräten 3 gesendeten Datenpakete 41, 42, 43 nicht, sodass einige Verfahren zur Kollisionsvermeidung oder Detektion nicht anwendbar sind. Zweckmäßig erhalten die Kommunikationsgeräte 3, wie bereits beschrieben, die Zeitfensterinformationen, zu welchen die Leitung für sie freigehalten ist, von der Steuerungseinheit 1 insbesondere aus den Datenpaketen der Steuerungseinheit 1. Die Kommunikationsgeräte 3 senden somit zeitversetzt zueinander ihre Datenpakete 41, 42, 43 sodass diese zeitlich aufeinanderfolgend und nicht überlappend in die Faser am Eingang des Verteilers 8 eingekoppelt werden und somit gesammelt über eine Faser an die Steuerungseinheit 1 gelangen. Die Kommunikationsgeräte 3 wandeln das optische Signal der Fasern bevorzugt in ein elektrisches Signal um, welches durch Verkabelung im Bus der Teilnehmer 4 der Teilnehmergruppe 5 geleitet wird. An einer Faser können sich ein oder mehrere Kommunikationsgeräte 3 befinden, wobei die Kommunikationsgeräte 3, welche sich an derselben Faser befinden auch untereinander kommunizieren könnten.

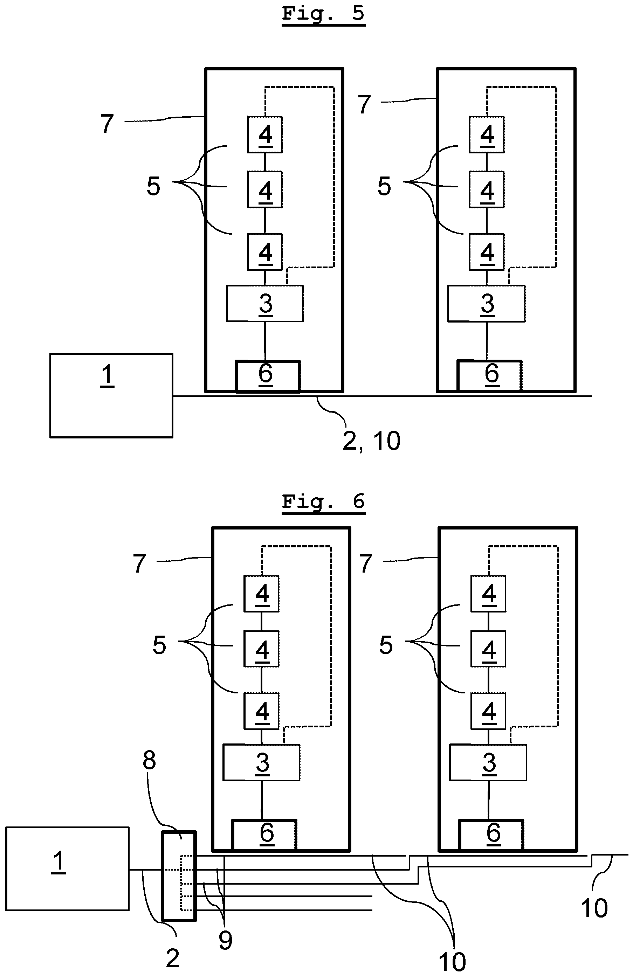

Fig. 5 veranschaulicht eine besonders bevorzugte Ausführungsvariante, bei welcher die Teilnehmer 4 jeder Teilnehmergruppe 5 in einer eigenen beweglichen Einheit 7 angeordnet sind. Bevorzugt ist auch das Kommunikationsgerät 3 in der beweglichen Einheit 7 enthalten. Die bewegliche Einheit 7 umfasst ein Sende- und Empfangsgerät 6, welches ein Signal vom Übertragungsweg 2 empfangen kann und ein Signal an den Übertragungsweg 2 übergeben kann. Das Sende- und Empfangsgerät 6 kann auch Bestandteil des Kommunikationsgeräts 3 sein. Das Sende- und Empfangsgerät 6 kann ein Funkempfänger oder Sender sein, sodass kein physischer Übertragungsweg 2 vorliegt und somit die bewegliche Einheit unabhängig von ihrer Bewegungsbahn im Sendebereich mit der Steuerungseinheit 1 in Datenverbindung bleibt.

Der Übertragungsweg 2 der Fig. 5 liegt aber bevorzugt physisch als Übertragungselement 10 entlang einer vorgegebenen Strecke vor. Dies bedeutet, dass sich entlang einer Strecke ein Übertragungselement 10 oder eine Reihe von entlang der Strecke aneinandergereihten Übertragungselementen 10 erstreckt, welche es an jedem Punkt der Strecke erlauben einen Datenaustausch zwischen zumindest einem Übertragungselement 10 und zumindest einem Kommunikationsgerät 3 herzustellen. An jedem Punkt des Übertragungselements 10 bzw. der Übertragungselemente 10 entlang der Strecke liegt das Signal der Steuerungseinheit 1 an, sodass jede bewegliche Einheit 7 entlang der Strecke die ausgehenden Datenpakete der Steuerungseinheit 1 empfängt. Datenpakete, welche Kommunikationsgeräte 3 an ein beliebiges Übertragungselement 10 der Strecke übergeben, werden an die Steuerungseinheit 1 weitergeleitet, wobei immer nur ein Kommunikationsgerät 3 zu einer Zeit Datenpakete an die Steuerungseinheit 1 sendet, sodass sich Datenpakete der beweglichen Einheiten 7 nicht zeitlich überlappen. Dadurch kann eine nahezu beliebige Anzahl von beweglichen Einheiten 7 entlang eines Übertragungselements 10 vorliegen.

Das Übertragungselement 10 ist bevorzugt als kontaktloses Übertragungselement 10 ausgeführt.

Das Übertragungselement 10 kann als induktives oder kapazitives kontaktloses Übertragungselement 10 ausgeführt sein. Das Übertragungselement 10 kann als optisches Übertragungselement 10 ausgeführt sein.

Bevorzugt ist das Übertragungselement 10 länglich ausgeführt, sodass es einen Bereich entlang der Strecke abdeckt, an welchem mehrere bewegliche Einheiten 7 vorliegen können. Bevorzugte Übertragungselemente 10 sind Hohlwellenleiter oder Seitenlichtfasern. Allgemein formuliert werden Leiter bevorzugt, welche ein elektrisches Signal, ein elektromagnetisches Signal oder ein optisches Signal leiten, wobei das Signal entlang der Längserstreckung des Leiters an die bewegliche Einheit 7, welche entlang der Längserstreckung des Leiters bewegt wird, übertragen werden kann und ein Signal von der beweglichen Einheit kommend in den Leiter eingekoppelt werden kann, bevorzugt kontaktlos. Die gesamte Strecke kann mit einem Übertragungselement 10 abgedeckt werden, wobei dieses aus kürzeren Segmenten seriell zusammengesetzt insbesondere zusammengesteckt werden kann.

Wie in Fig. 6 veranschaulicht ist, kann eine Strecke, entlang welcher zumindest eine bewegliche Einheit 7 bewegt werden kann, dadurch realisiert werden, indem entlang der Strecke mehrere aneinandergereihte Übertragungselemente 10 angeordnet sind, die jeweils vom von der Steuerungseinheit 1 ausgehenden Übertragungsweg 2 abgezweigt sind, insbesondere durch Einzelleiter 9. Um die Differenz des Laufzeitunterschieds zwischen benachbarten Übertragungselementen 10 gering zu halten, können diese mit sich schrittweise ändernder Leitungslänge aneinandergereiht sein, sodass die Änderung zwischen zwei Übertragungselementen 10 maximal die Schrittlänge beträgt, wie dargestellt. Um Laufzeitunterschiede zwischen den Übertragungselementen 10 zu vermeiden, können diese jeweils eine in etwa gleich lange Verbindungsleitung zur Steuerungseinheit 1 bzw. zum Verteiler 8 aufweisen (nicht dargestellt). Ausgehend von der Steuerungseinheit 1 wird ein Leiter somit auf mehrere Einzelleiter 9 aufgezweigt, welche zu den Übertragungselementen 10 verlaufen. Signale der Kommunikationsgeräte 3 in den beweglichen Einheiten 7, werden an die Übertragungselemente 10 übergeben und über die Einzelleiter 9 zum Verteiler 8 geführt und in diesem auf eine Leitung zur Steuerungseinheit 1 zusammengeführt, wobei wie oben beschrieben, durch ein geeignetes Verfahren sichergestellt ist, dass die Datenpakete der Kommunikationsgeräte 3 dabei nicht zeitlich überlappen.

Weniger bevorzugt können entlang der Strecke auch kleinflächige Sender und Empfänger von Nahfeldkommunikation oder RFID-Technologie angeordnet sein, welche jeweils einen Teilbereich der Strecke mit ihrem Sende- und Empfangsbereich abdecken, bevorzugt überlappend, wobei auch die beweglichen Einheit 7, welche entlang der Strecke bewegt werden mit solchen Sendern und Empfängern zur Nahfeldkommunikation oder RFID-Technologie ausgestattet sind. Alle Sender der Strecke senden dasselbe Signal der Steuerungseinheit 1, wenn nötig synchronisiert, sodass alle an der Strecke befindlichen beweglichen Einheiten 7 dasselbe Signal erhalten. Die Kommunikationsgerät 3 in den einzelnen beweglichen Einheiten 7 leiten jeweils nur das für sie bestimmte Datenpaket an ihre Teilnehmergruppe 5 weiter. Datenpakete der Kommunikationsgerät 3 werden von den Empfängern entlang der Strecke empfang und an einen Leiter oder mehrere Einzelleiter 9 übergeben und nicht zeitlich überlappend an die Steuerungseinheit 1 übermittelt. Die Pufferfunktionalität und das zeitversetzte Senden der Datenpakete der Kommunikationsgerät 3 könnte dabei auch in den Empfängern entlang der Strecke vorgesehen sein.

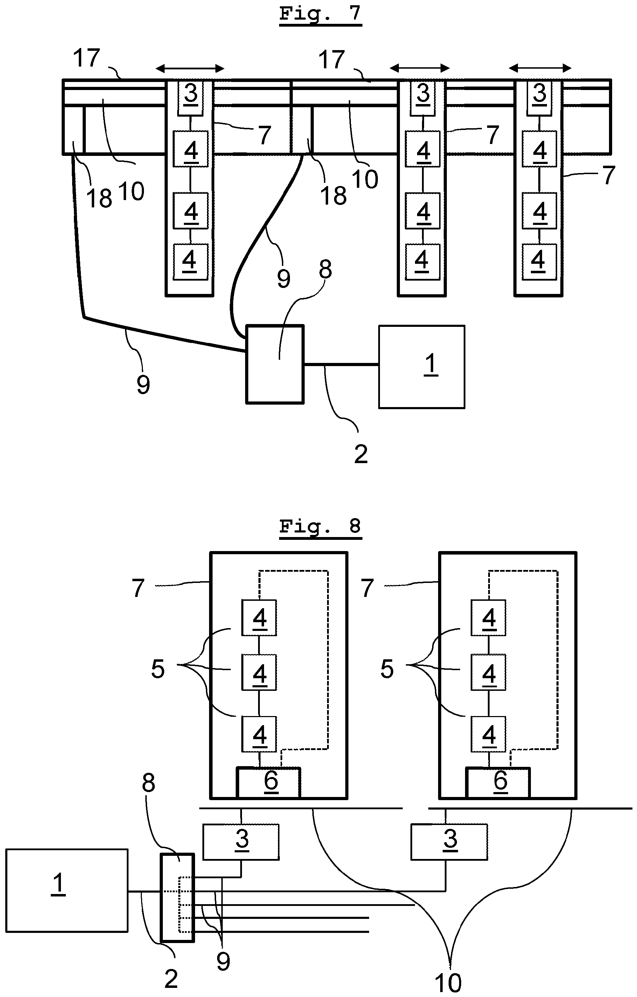

Fig. 7 veranschaulicht eine weitere beispielhafte Umsetzung eines erfindungsgemäßen Systems. Das System umfasst ein oder mehrere Übertragungselemente 10, welche entlang der Bewegungsstrecke zumindest einer beweglichen Einheit 7 angeordnet sind. Die Übertragungselemente 10 sind über Kopplungselemente 18 mit dem Übertragungsweg 2 oder Einzelleitern 9 des Übertragungsweges 2 verbunden. Das Kopplungselement 18 kann in unterschiedlichen Ausprägungen bzw. mit unterschiedlichen Funktionalitäten vorliegen. Das Kopplungselement 18 kann in Ausführungsvarianten ein Signal ohne Umwandlung und ohne Verstärkung zwischen dem Übertragungsweg 2 oder dessen Einzelleitern 9 und dem Übertragungselement 10 übergeben, beispielsweise indem dieses ein passives optisches Element ist, welches Licht zwischen einer Einzelfaser in Form eines Lichtwellenleiters und einem Übertragungselement 10 in Form einer Seitenlichtfaser koppelt. In einem elektrischen System wäre das Kopplungselement 18 in diesem Fall ein Stecker.

Das Kopplungselement 18 kann in Ausführungsvarianten als unidirektionaler oder bidirektionaler Signalverstärker vorliegen, sodass das vom Übertagungsweg 2 kommende Signal und/oder das vom Übertragungselement 10 kommende Signal verstärkt wird.

Das Kopplungselement 18 kann in Ausführungsvarianten als Wandler vorliegen, sodass das vom Übertagungsweg 2 kommende Signal einer ersten Art in ein Signal einer zweiten Art im Übertragungselement umgewandelt wird und umgekehrt. Bevorzugt erfolgt die Wandlung zwischen einem optischem und einem elektrischen Signal.

Das Kopplungselement 18 kann in Ausführungsvarianten mit Intelligenz ausgestattet sein. Das Kopplungselement 18 kann in Ausführungsvarianten synchronisiert zu anderen Kopplungselementen 18 Datenpakete der Steuerungseinheit an die Übertragungselemente 10 übergeben.

Das Kopplungselement 18 kann in Ausführungsvarianten über das Übertragungselement 10 empfangene Datenpakete der beweglichen Einheit 7 zwischenspeichern.

Das Kopplungselement 18 kann in Ausführungsvarianten eine synchronisierte oder kollisionsfrei Datenübertagung mit mehreren in Bereich seines Übertragungselements 10 befindlichen beweglichen Einheiten 7 vornehmen. Das Kopplungselement 18 kann in Ausführungsvarianten eine synchronisierte oder kollisionsfreie Datenübertagung mit anderen Kopplungselementen 18 und der Steuerungseinheit 1 vornehmen.

Sofern nur ein Übertragungselement 10 und an diesem ständig nur ein und dieselbe bewegliche Einheit 7 vorhanden ist, kann das Kopplungselement 18 als Kommunikationsgerät 3 vorliegen, oder dessen Funktionalitäten beinhalten. In diesem Fall koppelt das Kopplungselement 18 nur jene Datenpakete der Steuerungseinheit 1 in das Übertragungselement 10, welche für die bewegliche Einheit 7 bestimmt sind.

Auch wenn entlang einer Strecke mehrere Übertragungselemente 10 aneinander anschließend angeordnet sind und entlang der Strecke mehrere bevorzugt idente bewegliche Einheiten 7 bewegt werden, wobei immer nur eine bewegliche Einheit 7 im Bereich eines Übertragungselements 10 ist, können die Kommunikationsgeräte 3 an den Übertragungselementen 10 und nicht an den beweglichen Einheiten 7 vorliegen. (Veranschaulicht in Fig. 8) In diesem Fall werden von der Steuerungseinheit 1 nicht die beweglichen Einheiten 7 direkt adressiert, sondern die Übertragungselemente 10 an denen sie sich befinden. Wenn die Teilnehmer 4 und das Bussystem der bewegliche Einheiten 7 für mehrere bewegliche Einheiten 7 ident vorliegen, spielt es für die Datenpakete der Steuerungseinheit 1 keine Rolle, von welcher beweglichen Einheit 7 diese empfangen werden, da jedes Datenpaket von jeder beweglichen Einheit 7 bearbeitet werden kann. Es werden bei dieser Variante die beweglichen Einheiten 7 somit nicht direkt individuell adressiert und gesteuert, sondern nach deren jeweiliger Position an der Strecke über das jeweilige Streckenelement, wobei dieses bevorzugt auch Datenpakete der Steuerungseinheit 1 puffern kann, sodass diese erst an das Übertragungselement 10 übergeben werden, wenn eine neue bewegliche Einheit 7 in dessen Übertragungsbereich gelangt. Beispielsweise ist es auch möglich, dass das Kommunikationsgerät 3 ein Datenpaket der Steuerungseinheit 1 speichert und an jede ankommende bewegliche Einheit 7 übergibt, bis ein geändertes Datenpaket von der Steuerungseinheit 1 an das Kommunikationsgerät 3 gesendet wird. Vorteilhaft an dieser Variante ist, dass der Aufbau der beweglichen Elemente 7 vereinfacht wird und eine Gewichtsreduktion erfolgt. Nachteilig ist die indirekte Kommunikation mit den beweglichen Einheiten 7 über das jeweilige Übertragungselement 10 an dem sie sich gerade befinden. Sollten mehrere Arten von beweglichen Einheit 7 entlang der Strecke bewegt werden, müssten im Kommunikationsgerät 3 Anweisungen für die unterschiedlichen Arten von beweglichen Einheiten 7 gespeichert sein und für das Kommunikationsgerät 3 erkennbar sein, welche Art von beweglicher Einheit 7 sich gerade im Bereich seines Übertragungselements 10 befindet.

Eine weitere Möglichkeit wäre an den Streckenelementen 17 Kommunikationsgeräte 3 vorzusehen und an den beweglichen Einheiten 7 Kommunikationsgeräte 3 vorzusehen, wobei die Kommunikationsgeräte 3 der Streckenelemente 17 an deren Eingang mit den anderen Streckenelementen und mit der Steuerungseinheit 1 synchron oder kollisionsfrei kommunizieren und an deren Ausgang über das Übertragungselement 10 mit den mit dem Übertragungselement 10 in Datenverbindung befindlichen Kommunikationsgeräten 3 der beweglichen Einheiten 7 synchron oder kollisionsfrei kommunizieren. Die Kommunikationsgeräte 3 der Streckenelemente könnten dabei auch genutzt werden, um Teilnehmer 4, welche permanent am Streckenelement vorliegen, anzusteuern. Bevorzugt weist dazu das Streckenelement Teilnehmer 4 einer Teilnehmergruppe 5 auf, welche über ein Bussystem, bevorzugt Linien- oder Ringbus mit dem Kommunikationsgerät 3 in Datenverbindung stehen. Das Kommunikationsgerät 3 des Streckenelements kann alle an Kommunikationsgeräte 3 der beweglichen Einheiten 7 adressierten Datenpakete an das Übertragungselement 10 weitergeben und nur die an das Kommunikationsgerät 3 des Streckenelements adressierten Datenpakete an die Teilnehmergruppe 5 des Streckenelements. Das Kommunikationsgerät 3 des Streckenelements benötigt somit eine Schnittstelle zum Übertragungsweg 2, eine Schnittstelle zum Übertragungselement 10 und eine Schnittstelle zum Bussystem des Streckenelements 17. Zudem oder alternativ zur Schnittstelle zum Bussystem des Streckenelements kann das Kommunikationsgerät 3 des Streckenelements 17 eine Schnittstelle zu einer Bearbeitungs- oder Handhabungsvorrichtung aufweisen, welche im Bereich des Streckenelements angeordnet ist, um direkt mit dem Bussystem dieser oder mit einem Kommunikationsgerät 3 dieser zu kommunizieren.

Das Kommunikationsgerät 3 des Streckenelements 17 stellt eine kollisionsfreie Kommunikation seiner Teilnehmer 4 sicher und puffert die Datenpakete zur kollisionsfreien Übertragung an die Steuerungseinheit 1.

In einer weiteren Ausführungsvariante ist es auch möglich, dass bewegliche Einheiten 7, aktive Streckenelemente und/oder Bearbeitungs- oder Handhabungsvorrichtung entlang der Strecke jeweils ein eigenes Kommunikationsgerät 3 aufweisen, welche an einen gemeinsamen Übertragungsweg zur Steuerungseinheit 1 angebunden sind, wobei alle Kommunikationsgeräte 3 Datenpakete synchronisiert oder zumindest kollisionsfrei an die Steuerungseinheit 1 übertragen. Alternativ können die Ansteuerung von Streckenelement und/oder von Bearbeitungs- oder Handhabungsvorrichtung unabhängig, also über getrennte Übertragungswege, von der Ansteuerung der beweglichen Einheiten 7 erfolgen.

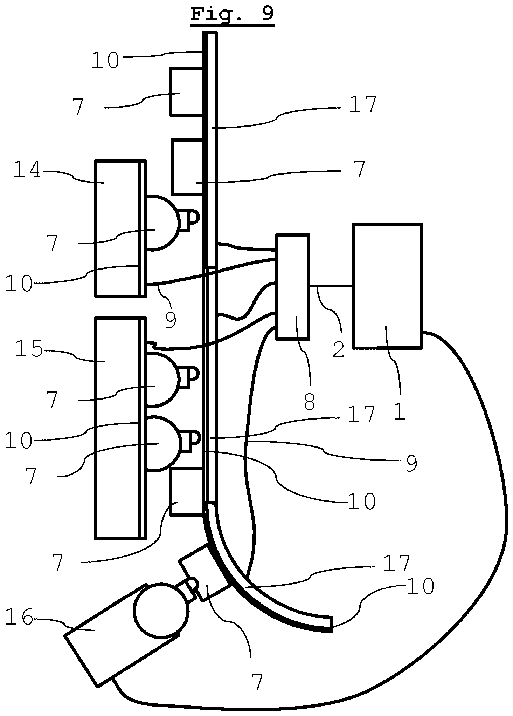

Fig. 9 veranschaulicht unterschiedliche Anwendungen des gegenständlichen Systems oder Verfahrens, welche unabhängig voneinander implementiert werden können. Die Bearbeitungs- oder Handhabungsvorrichtung 14 veranschaulicht eine Umsetzung des gegenständlichen Systems mit einer einzelnen beweglichen Einheit 7. Die bewegliche Einheit 7 ist zumindest entlang einer Strecke oder Führung der Bearbeitungs- oder Handhabungsvorrichtung 14 beweglich und befindet sich dabei in Datenverbindung mit einem oder mehreren Übertragungselementen 10 der Bearbeitungs- oder Handhabungsvorrichtung 14, deren Sende- und Empfangsbereich jede mögliche Position der beweglichen Einheit 7 umfasst. Dabei ist auch eine zweidimensionale oder dreidimensionale Bewegung der beweglichen Einheit 7 möglich, beispielsweise wenn das Übertragungselement 10 ein oder mehrere Funkempfänger und Funksender umfasst, oder wenn die Führung, an welcher die bewegliche Einheit 7 direkt vorliegt, mit einem Leiter versehen ist, der eine Signalübertragung entlang seiner Längserstreckung an die bewegliche Einheit 7 ermöglicht. Vorteilhaft kann so bei einer Bearbeitungs- oder Handhabungsvorrichtung 14 der Kabelschlepp entfallen, welcher ansonsten zur Ansteuerung der unterschiedlichen Antriebe und Sensoren der beweglichen Einheit 7 der Bearbeitungs- oder Handhabungsvorrichtung 14 benötigt würde. Insbesondere kann es sich bei der Bearbeitungs- oder Handhabungsvorrichtung 14 um einen Portalkran oder einen Portalroboter handeln. Das Kommunikationsgerät 3 kann an der Bearbeitungs- oder Handhabungsvorrichtung 14 oder direkt an der beweglichen Einheit 7 vorgesehen sein. Der Antrieb zur Bewegung der beweglichen Einheit 7 entlang der Führung kann bei dieser Ausführungsvariante an der Führung oder an der beweglichen Einheit 7 vorliegen.

Die Bearbeitungs- oder Handhabungsvorrichtung 15 veranschaulicht eine Bearbeitungs- oder Handhabungsvorrichtung, welche zumindest zwei bewegliche Einheiten 7 entlang einer Strecke oder Führung aufweist. Vorteilhaft sind die Kommunikationsgerät 3 in den beweglichen Einheiten 7 angebracht, um diese unabhängig von der Position, Art und Anzahl der beweglichen Einheiten 7 adressierbar zu machen.

Die Bearbeitungs- oder Handhabungsvorrichtung 16 ist auf herkömmliche bzw. andere Weise über einen eigenen direkten Übertragungsweg an die Steuerungseinheit 1 angeschlossen und soll veranschaulichen, dass das gegenständliche System auch mit herkömmlichen Systemen oder anderen Topologien kombinierbar ist. Natürlich wäre es auch möglich die Bearbeitungs- oder Handhabungsvorrichtung 16 mit einem Kommunikationsgerät 3 zu versehen und mit einem Einzelleiter 9 an den Verteiler 8 anzuschließen. Fig. 9 veranschaulicht zudem eine Transportstrecke, welche aus einzelnen Streckenelementen 17 zusammengesetzt ist. Entlang der Transportstrecke verläuft zumindest ein Übertragungselement 10, welches an den Übertragungsweg 2 angebunden ist. Bevorzugt weist jedes Streckenelement 17 zumindest ein eigenes Übertragungselement 10 auf, welches an den Übertragungsweg 2 angebunden ist. Entlang der Transportstrecke werden mehrere bewegliche Einheiten 7 transportiert, welche jeweils ein Bussystem mit mehreren Teilnehmern 4 aufweisen und über ein Kommunikationsgerät 3 auf eine wie weiter oben beschriebene Weise mit der Steuerungseinheit 1 kommunizieren.

Bevorzugt erfolgt die Ansteuerung von zumindest zwei Teilnehmern 4 unterschiedlicher Kommunikationsgeräte 3 synchronisiert. Bevorzugt erfolgt die Ansteuerung von zumindest eines Teilnehmers 4 eines Kommunikationsgeräte 3 und eines anderen Teilnehmers, welcher direkt, bzw. nicht über das erfindungsgemäße System, von der Steuerungseinheit 1 angesteuert wird, synchronisiert.

Die Synchronisation erfolgt bevorzugt über die Steuerungseinheit 1, wobei die Synchronisation über die von der Steuerungseinheit 1 gesendeten Datenpakete, insbesondere Gesamtpakete, erfolgt.

Bevorzugt werden zumindest ein Teilnehmer 4, welcher eine Bewegung einer beweglichen Einheiten 7 hervorruft und ein zweiter Teilnehmer 4, welcher eine Bewegung einer zweiten beweglichen Einheiten 7 hervorruft synchronisiert angesteuert. Bevorzugt können dadurch zumindest zwei bewegliche Einheiten 7 an einer Führung synchron zueinander bewegt werden. Bevorzugt werden mehrere bewegliche Einheiten 7, welche entlang einer Transportstrecke bewegt werden, durch eine Steuerungseinheit 1 synchronisiert.

Bevorzugt können zumindest zwei bewegliche Einheiten 7 an zumindest zwei unterschiedlichen Führungen synchronisiert zueinander bewegt werden. Bevorzugt werden eine erste bewegliche Einheit 7 entlang einer Führung einer Bearbeitungs- oder Handhabungsvorrichtung und eine zweite bewegliche Einheit 7 entlang einer Transportstrecke synchronisiert zueinander bewegt. Durch die Synchronisation zumindest einer Bewegungsachse (rotatorisch und/oder lineare Bewegungsachse) der Bearbeitungs- oder Handhabungsvorrichtung und zumindest einer Bewegungsachse (Bewegungsachse entlang der Transportstrecke und/oder zusätzliche rotatorisch und/oder lineare Bewegungsachse) der beweglichen Einheit 7 an der Transportstrecke können komplizierte Handhabungs- oder Bearbeitungsvorgänge vorgenommen werden, oder die Achse der Transportstrecke kann eine Achse der Bearbeitungs- oder Handhabungsvorrichtung ersetzen. Beispielsweise ist es auch möglich die beweglichen Einheiten 7 der Transportstrecke während der Bearbeitung oder Manipulation durch die Handhabungs- oder Bearbeitungsvorrichtung kontinuierlich entlang der Transportstrecke zu bewegen und das Werkzeug oder den Teilemanipulator der Handhabungs- oder Bearbeitungsvorrichtung innerhalb des Arbeitsbereichs der Handhabungs- oder Bearbeitungsvorrichtung synchronisiert in Richtung der Transportstrecke mit zu bewegen. Dadurch kann ein Abbremsen und erneutes Anfahren der beweglichen Einheit 7 der Transportstrecke vorteilhaft vermieden werden.

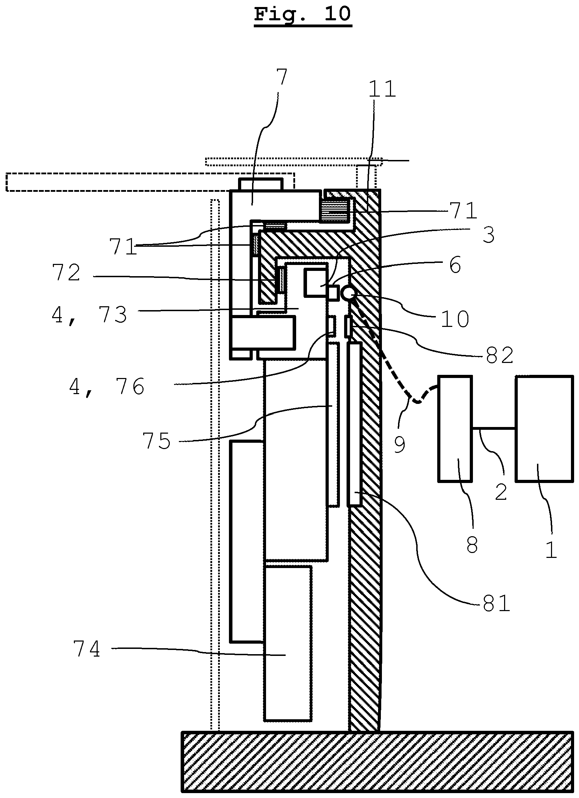

Fig. 10 veranschaulicht einen beispielhaften Aufbau einer beweglichen Einheit 7 des gegenständlichen Systems an einem beispielhaften Streckenelement 17 oder einer Führung des gegenständlichen Systems.

An der Führung oder dem Streckenelement 17 liegt ein Übertragungselement 10 vor, welches das Signal der Steuerungseinheit 1 zu den beweglichen Einheiten 7 leitet. Jede bewegliche Einheit 7 weist zumindest ein Sende- und Empfangsgerät 6 auf, welches das Signal aus dem Übertragungselement 10 auslesen kann und ein Signal in das Übertragungselement 10 einspeisen kann. Bevorzugt weist die bewegliche Einheit 7 das Kommunikationsgerät 3 auf, welches nur die an die Teilnehmer 4 der beweglichen Einheit 7 adressierten Datenpakete an das Bussystems der beweglichen Einheit 7 weiterleitet und Datenpakete der Teilnehmer 4 kollisionsfrei über das Übertragungselement 10 an die Steuerungseinheit 1 zurückgibt. Die bewegliche Einheit 7 kann auch zwei in Bewegungsrichtung entlang der Führung zueinander beabstandete Sende- und Empfangsgerät 6 aufweisen, sollte dies an den Übergängen zwischen zwei entlang der Führung aneinander angrenzenden Übertragungselementen 10 erforderlich sein. Dadurch kann selbst im Fall einer Lücke zwischen den Übertragungselementen 10 sichergestellt werden, dass keine Unterbrechung der Datenübertragung resultiert, da zumindest immer ein Sende- und Empfangsgerät 6 in Datenverbindung mit einem Übertragungselement 10 steht.

Die bewegliche Einheit 7 ist bevorzugt in einer Führung einer Transportstrecke oder einer Handhabungs- oder Bearbeitungsmaschine gehalten und mithilfe von Führungselementen 71 in dieser geführt. Die bewegliche Einheit 7 oder die Führung weist ein Antriebselement 72 auf, mit welchem die bewegliche Einheit 7 entlang der Führung bewegt wird.

Bevorzugt ist das Antriebselement 72 Teil der beweglichen Einheit 7.

Bevorzugt weist die bewegliche Einheit 7 einen Motor 73 zum Antrieb des Antriebselements 72 auf. Zudem können die bewegliche Einheit 7 weitere Motoren aufweisen, beispielsweise wenn die bewegliche Einheit 7 zumindest eine weitere Bewegungsachse aufweist. Eine weitere Bewegungsachse an der Einheit 7 kann eine Rotationsachse oder eine Linearachse sein. Dadurch kann ein in der Einheit 7 aufgenommenes Teil, insbesondere Werkzeug oder Werkstück, zusätzlich zur Bewegung entlang der Führung von der beweglichen Einheit 7 selbst bewegt werden, beispielsweise rotiert werden, oder entlang einer Achse quer zur Transportrichtung bewegt werden.

Bevorzugt weist die bewegliche Einheit 7 einen Energiespeicher 74 zum Antrieb des Motors 73 auf.

Bevorzugt weist die bewegliche Einheit 7 ein Energieempfangsmodul 75 zum bevorzugt kontaktlosen Übertragen von Energie vom Streckenelement an den Motor 73 und/oder den Energiespeicher 74 auf. Bevorzugt weist das Streckenelement 17 zumindest ein Energieübertragungsmodul 81 zum Übertragen von Energie an das Energieempfangsmodul 75 auf. Bevorzugt liegen ein oder mehrere Energieübertragungsmodule 81 über die gesamte Länge der Transportstrecke oder der einzelnen Streckenelemente 17 vor, zur lückenlosen Energieübertragung an die beweglichen Einheiten 7.

Bevorzugt weist die bewegliche Einheit 7 einen Sensor 76 zur Erfassung der Istposition der beweglichen Einheit 7 am Streckenelement 17 auf. Bevorzugt weist das Streckenelement 17 einen Absolutwertspur 82 auf, aus welcher der Sensor 76 die Absolutposition der beweglichen Einheit 7 am Streckenelement 17 ablesen kann. Bevorzugt weist jede Position am Streckenelement 17, oder jede Position entlang der Transportstrecke einen eindeutigen Absolutwert auf, sodass die Istposition jeder beweglichen Einheit 7 jederzeit erfasst werden kann, gegebenenfalls mit zusätzlicher Kenntnis des Streckenelements 17 oder des Übertragungselements 10 an dem sich die bewegliche Einheit 7 gerade befindet.

Bevorzugt ist ein Transportsystem für bewegliche Einheiten 7, bevorzugt in Form von Teile- oder Werkstückträgern, entlang einer Strecke vorgesehen, wobei die Strecke eine Führung für die beweglichen Einheiten 7 aufweist und wobei entlang der Strecke zumindest ein Energieübertragungsmodul 81 verläuft, welches zur lückenlosen Übertragung von Energie an die beweglichen Einheiten 7 dient, wobei jede von mehreren beweglichen Einheiten 7 selbst einen Antrieb und Energiespeicher 74 aufweist, wobei der Antrieb über ein an der Führung der Strecke abrollendes Antriebsmittel erfolgt, welches von einem Motor 73 der beweglichen Einheit 7 angetrieben ist und wobei jede bewegliche Einheit 7 zumindest ein Empfängermodul aufweist zum Empfang der übertragenen Energie, wobei sich entlang der Strecke zumindest eine Absolutwertspur 82 erstreckt. Bevorzugt ist die Absolutwertspur 82 im Bereich zumindest eines der Energieübertragungsmodule 81 oder Übertragungselemente 10 mit eindeutigen Codewerten zur Positionskodierung entlang der Strecke versehen, wobei jede der mehreren beweglichen Einheiten 7 zumindest einen Absolutwertsensor aufweist, welcher den Absolutwert der Absolutwertspur 82 ausliest.

## Patentansprüche

1. Verfahren zur Datenübertragung in einem Datenübertragungssystem von Automationssystemen, Maschinen oder Fahrzeugen, welches zumindest eine zentrale Steuerungseinheit (1) aufweist, wobei ausgehende Datenpakete der Steuerungseinheit (1) an unterschiedliche Teilnehmer (4) gesendet werden, wobei jedes ausgehende Datenpaket der Steuerungseinheit (1) zumindest eine Adressinformation und zu übermittelnde Daten enthält, wobei das Datenübertragungssystem zumindest einen Übertragungsweg (2) aufweist, über welchen Datenpakete von unterschiedlichen Teilnehmern (4) an die Steuerungseinheit (1) gesendet werden,
**dadurch gekennzeichnet, dass**
die Steuerungseinheit (1) über den Übertragungsweg (2) mit mehreren Kommunikationsgeräten (3) in Datenverbindung steht, wobei jedem der Kommunikationsgeräte (3) eine Teilnehmergruppe (5) von Teilnehmern (4) zugeordnet ist, wobei jede Teilnehmergruppe (5) nur einem Kommunikationsgerät (3) zugeordnet ist, wobei jeweils die Teilnehmergruppe (5) von Teilnehmern (4) und das zugeordnete Kommunikationsgerät (3) durch einen Datenbus verbunden sind und wobei die Teilnehmergruppe (5) von Teilnehmern (4) über das jeweils zugeordnete Kommunikationsgerät (3) am Übertragungsweg (2) angebunden ist, welches Kommunikationsgerät (3) zumindest die Adressinformation eines ausgehenden Datenpakets der Steuerungseinheit (1) liest und an der Adressinformation des ausgehenden Datenpakets erkennt, ob es selbst oder ein Teilnehmer (4) seiner Teilnehmergruppe (5) vom ausgehenden Datenpaket angesprochen ist, wobei das ausgehenden Datenpaket oder Teile davon nur an die Teilnehmergruppe (5) von Teilnehmern (4) weitergegeben wird, wenn diese Voraussetzung erfüllt ist, sodass das ausgehende Datenpaket von dem zumindest einen adressierten Teilnehmer (4) bearbeitbar ist und wobei eine Antwort oder ein modifiziertes oder neues Datenpaket zumindest eines Teilnehmers (4) der Teilnehmergruppe (5) an das jeweils zugeordnete Kommunikationsgerät (3) übermittelt wird und wobei das Kommunikationsgerät (3) die Antwort oder das modifizierte oder neue Datenpaket des zumindest einen Teilnehmers (4) in einer Zeitspanne an die Steuerungseinheit (1) über den Übertragungsweg (2) übermittelt, in welcher Zeitspanne kein anderes der Kommunikationsgeräte (3) Datenpakete an die Steuerungseinheit (1) übermittelt.

2. Verfahren nach Anspruch 1, **dadurch gekennzeichnet, dass** die Steuerungseinheit (1) Zeitfenster- Informationen für die Datenübertragung am Übertragungsweg (2) an die Kommunikationsgeräte (3) sendet, wobei jedes Kommunikationsgerät (3) daraus die Information erhält, in welcher Zeitspanne es Datenpakete an die Steuerungseinheit (1) übermitteln kann.

3. Verfahren nach einem der Ansprüche 1 bis 2, **dadurch gekennzeichnet, dass** die Steuerungseinheit (1) ein Clock-Signal zur Synchronisation der Kommunikationsgeräte (3) und/oder der Teilnehmer (4) der Kommunikationsgeräte (3) sendet.

4. Verfahren nach einem der Ansprüche 1 bis 3, **dadurch gekennzeichnet, dass** das ausgehende Datenpaket Adressinformationen zumindest eines Kommunikationsgeräts (3) und Adressinformationen zumindest eines Teilnehmers (4) dieses Kommunikationsgeräts (3) enthält.

5. Verfahren nach Anspruch 4, **dadurch gekennzeichnet, dass** es sich bei den Adressinformationen der Kommunikationsgeräte (3) um eindeutige Adressinformationen handelt, sodass jedes Kommunikationsgerät (3) am Übertragungsweg von der Steuerungseinheit (1) eindeutig adressierbar ist.

6. Verfahren nach einem der Ansprüche 1 bis 5, **dadurch gekennzeichnet, dass** die Teilnehmer (4) einer Teilnehmergruppe (5) über eine Linien- oder Ringtopologie mit dem Kommunikationsgerät (3) kommunizieren.

7. Verfahren nach einem der Ansprüche 1 bis 6, **dadurch gekennzeichnet, dass** die Kommunikationsgeräte (3) über eine Bustopologie mit der Steuerungseinheit (1) kommunizieren.

8. Verfahren nach einem der Ansprüche 1 bis 7, **dadurch gekennzeichnet, dass** in der Steuerungseinheit (1) mehrere Master des Systems softwaretechnisch abgebildet sind oder als Steckkarten an der Steuerungseinheit (1) vorliegen, wobei jeder Master mit nur einem Kommunikationsgerät (3) kommuniziert.

9. Verfahren nach einem der Ansprüche 1 bis 8, **dadurch gekennzeichnet, dass** der Übertragungsweg (2) ausgehend von der Steuerungseinheit (1) als Leiter in Form eines Lichtwellenleiters oder elektrischen Leiters vorliegt.

10. Verfahren nach Anspruch 9, **dadurch gekennzeichnet, dass** der Leiter auf mehrere Einzelleiter (9) verzweigt wird, wobei die Kommunikationsgeräte (3) an den Einzelleitern (9) des Übertragungswegs (2) vorliegen.

11. Verfahren nach einem der Ansprüche 1 bis 10, **dadurch gekennzeichnet, dass** zumindest eine bewegliche Einheit (7), welche zumindest eine Teilnehmergruppe (5) von Teilnehmern (4) umfasst, entlang zumindest eines Übertragungselements (10) bewegt wird, wobei die bewegliche Einheit (7) Daten vom Übertragungselement (10) erhält und Daten an das Übertragungselement (10) übergeben kann, indem das Übertragungselement (10) derart vorliegt, dass ein Signal an jeder beliebigen Position entlang seiner Längserstreckung in Bewegungsrichtung der bewegliche Einheit (7) zwischen dem Übertragungselement (10) und der beweglichen Einheit (7) übertragbar ist.

12. Verfahren nach Anspruch 11, **dadurch gekennzeichnet, dass** die bewegliche Einheit (7) das Kommunikationsgerät (3) der Teilnehmergruppe (5) aufweist.

13. Verfahren nach einem der Ansprüche 11 oder 12, **dadurch gekennzeichnet, dass** das Übertragungselement (10) Teil des Übertragungsweges (2) ist, indem dieses mit der Steuerungseinheit (1) in Datenverbindung steht.

14. Verfahren nach Anspruch 12, **dadurch gekennzeichnet, dass** mehrere Übertragungselemente (10) in Form von Einzelleitern (9) vorliegen, welche jeweils einen Teilbereich der Bewegungsstrecke der zumindest einen beweglichen Einheit (7) abdecken, wobei jeder Einzelleiter (9) Signale der Steuerungseinheit (1) leitet und wobei im Bereich der Einzelleiter (9) befindliche bewegliche Einheiten (7) über deren Kommunikationsgeräte (3) Signale aus dem Einzelleiter (9) erhalten und Signale an zumindest einen Einzelleiter (9) zurückgeben, welche über den Einzelleiter (9) zurück an die Steuerungseinheit (1) gelangen.

15. Verfahren nach einem der Ansprüche 11 bis 14, **dadurch gekennzeichnet, dass** es sich bei den beweglichen Einheiten (7) um Transportwägen oder bewegte Teilehalter eines Transportsystems oder um bewegliche Komponenten von Maschinen handelt, welche entlang einer Führung bewegt werden.

16. Verfahren nach einem der Ansprüche 1 bis 15, **dadurch gekennzeichnet, dass** die Teilnehmer (4) je einer Teilnehmergruppe (5) und deren Kommunikationsgerät (3) gemeinsam an einer beweglichen Einheit (7) einer Automationsanlage angebracht sind, wobei die Automationsanlage zumindest eine derartige bewegliche Einheiten (7) aufweist, wobei die beweglichen Einheiten (7) entlang einer gemeinsamen Führung bewegt werden, wobei entlang der Führung zumindest ein Übertragungselement (10) vorliegt, sodass entlang der Erstreckung des Übertragungselements (10) in Transportrichtung der beweglichen Einheiten (7) Signale zwischen dem Übertragungselement (10) und Kommunikationsgeräten (3) der beweglichen Einheit (7) übertragen werden können, wobei jede bewegliche Einheit (7) zumindest einen Motor (73) zum Verfahren der beweglichen Einheit (7) entlang der Führung aufweist.

17. Verfahren nach einem der Ansprüche 1 bis 16, **dadurch gekennzeichnet, dass** die Teilnehmer (4) zumindest einer Teilnehmergruppe (5) und deren Kommunikationsgerät (3) gemeinsam an einer beweglichen Einheit (7) einer Automationsanlage angebracht sind, wobei zumindest eine solche bewegliche Einheit (7) entlang einer ersten Führung bewegt wird, wobei entlang der ersten Führung zumindest ein Übertragungselement (10) vorliegt, sodass entlang der Erstreckung des Übertragungselements (10) in Transportrichtung der beweglichen Einheit (7) Signale zwischen dem Übertragungselement (10) und dem Kommunikationsgerät (3) der beweglichen Einheit (7) übertragen werden können,
wobei die Automationsanlage zumindest ein weiteres bewegliches Element aufweist, wobei das weitere bewegliche Element entlang einer anderen zweiten Führung und/oder um eine Achse bewegt wird,
wobei zumindest eine Bewegung des Weiteren beweglichen Elements synchronisiert zu zumindest einer Bewegung der beweglichen Einheit (7) erfolgt, wobei die Bewegung der beweglichen Einheit (7) ausgewählt ist aus der Gruppe von Bewegungen umfassend:
Bewegung der beweglichen Einheit (7) entlang der ersten Führung;
Bewegung eines Elements der beweglichen Einheit (7) entlang oder um eine Bewegungsachse an der beweglichen Einheit (7).

18. Verfahren nach einem der Ansprüche 11 bis 17, **dadurch gekennzeichnet, dass** die Bewegung einer ersten beweglichen Einheit (7) und die Bewegung zumindest einer zweiten beweglichen Einheit (7) oder zumindest eines weiteren beweglichen Elements des Automationssystems, der Maschine oder des Fahrzeugs synchronisiert erfolgen, wobei die Synchronisation durch die Steuerungseinheit (1) erfolgt.

19. Verfahren nach Anspruch 18, **dadurch gekennzeichnet, dass** die Synchronisation
dadurch erfolgt, dass die von der Steuerungseinheit (1) gesendeten Datenpakete ein Taktsignal enthalten.

20. Verfahren nach einem der Ansprüche 1 bis 19, **dadurch gekennzeichnet, dass** von der Steuerungseinheit (1) ausgehende Datenpakete innerhalb von Zeitfenstern mit konstantem Takt und konstanter Länge gesendet werden.

## Claims

1. A method for data transmission in a data transmission system of automation systems, machines or vehicles, which has at least one central controller (1), wherein outgoing data packets of the controller (1) are sent to different subscribers (4), wherein each outgoing data packet of the controller (1) contains at least one piece of address information and data to be transmitted, wherein the data transmission system has at least one transmission path (2) via which data packets are sent from different subscribers (4) to the controller (1),
**characterized in that**
the controller (1) is in data communication with a plurality of communication devices (3) via the transmission path (2), wherein a subscriber group (5) of subscribers (4) is assigned to each of the communication devices (3), wherein each subscriber group (5) is assigned to only one communication device (3), wherein
in each case the subscriber group (5) of subscribers (4) and the assigned communication device (3) are connected by a data bus and wherein the subscriber group (5) of subscribers (4) is connected to the transmission path (2) via the respectively assigned communication device (3), which communication device
(3) reads at least the address information of an outgoing data packet of the controller (1) and recognizes from the address information of the outgoing data packet whether it itself or a subscriber (4) of its subscriber group (5) is addressed by the outgoing data packet, wherein the outgoing data packet or parts thereof is only passed on to the subscriber group (5) of subscribers (4) if this condition is met, so that the outgoing data packet can be processed by the at least one addressed subscriber (4) and wherein a response or a modified or new data packet of at least one subscriber (4) of the subscriber group (5) is transmitted to the respectively assigned communication device (3) and wherein the communication device (3) transmits the response or the modified or new data packet of the at least one subscriber (4) to the controller (1) via the transmission path (2) in a time period in which time period no other of the communication devices (3) transmits data packets to the controller (1).

2. The method according to claim 1, **characterized in that** the controller (1) sends time window information for the data transmission on the transmission path (2) to the communication devices (3), wherein each communication device (3) receives the information therefrom in which time period it can transmit data packets to the controller (1).

3. The method according to one of claims 1 to 2, **characterized in that** the controller (1) sends a clock signal for synchronizing the communication devices (3) and/or the subscribers (4) of the communication devices (3).

4. The method according to one of claims 1 to 3, **characterized in that** the outgoing data packet contains address information of at least one communication device (3) and address information of at least one subscriber (4) of this communication device (3).

5. The method according to claim 4, **characterized in that** the address information of the communication devices (3) is unique address information, so that each communication device (3) on the transmission path can be uniquely addressed by the controller (1).

6. The method according to one of claims 1 to 5, **characterized in that** the subscribers (4) of a subscriber group (5) communicate with the communication device (3) via a line or ring topology.

7. The method according to one of claims 1 to 6, **characterized in that** the communication devices (3) communicate with the controller (1) via a bus topology.

8. The method according to one of claims 1 to 7, **characterized in that** multiple masters of the system are mapped by software in the controller (1) or are present as plug-in cards on the controller (1), wherein each master communicates with only one communication device (3).

9. The method according to one of claims 1 to 8, **characterized in that** the transmission path (2) starting from the controller (1) is present as a conductor in the form of an optical waveguide or electrical conductor.

10. The method according to claim 9, **characterized in that** the conductor is branched to a plurality of individual conductors (9), wherein the communication devices (3) are present on the individual conductors (9) of the transmission path (2).

11. The method according to one of claims 1 to 10, **characterized in that** at least one movable unit (7), which comprises at least one subscriber group (5) of subscribers (4), is moved along at least one transmission element (10), wherein the movable unit (7) receives data from the transmission element (10) and can transmit data to the transmission element (10), **in that** the transmission element (10) is present such that a signal can be transmitted between the transmission element (10) and the movable unit (7) at any position along its longitudinal extent in the direction of movement of the movable unit (7).

12. The method according to claim 11, **characterized in that** the movable unit (7) comprises the communication device (3) of the subscriber group (5).

13. The method according to one of claims 11 or 12, **characterized in that** the transmission element (10) is part of the transmission path (2) **in that** it is in data communication with the controller (1).

14. The method according to claim 12, **characterized in that** multiple transmission elements (10) are present in the form of individual conductors (9), each of which covers a partial area of the movement path of the at least one movable unit (7), wherein each individual conductor (9) conducts signals of the controller (1) and wherein movable units (7) located in the area of the individual conductors (9) receive signals from the individual conductor (9) via their communication devices (3) and return signals to at least one individual conductor (9), which signals are returned to the controller (1) via the individual conductor (9).

15. The method according to one of claims 11 to 14, **characterized in that** the movable units (7) are transport carriages or movable part holders of a transport system or movable components of machines which are moved along a guide.

16. The method according to one of claims 1 to 15, **characterized in that** the subscribers (4) of each subscriber group (5) and their communication device (3) are jointly attached to a movable unit (7) of an automation system, wherein the automation system comprises at least one such movable unit (7), wherein the movable units (7) are moved along a common guide, wherein at least one transmission element (10) is present along the guide, such that signals can be transmitted between the transmission element (10) and communication devices (3) of the movable unit (7) along the extension of the transmission element (10) in the transport direction of the movable units (7), wherein each movable unit (7) comprises at least one motor (73) for moving the movable unit (7) along the guide.

17. The method according to one of claims 1 to 16, **characterized in that** the subscribers (4) of at least one subscriber group (5) and their communication device (3) are jointly attached to a movable unit (7) of an automation system, wherein at least one such movable unit (7) is moved along a first guide, wherein at least one transmission element (10) is present along the first guide, so that signals can be transmitted between the transmission element (10) and the communication device (3) of the movable unit (7) along the extension of the transmission element (10) in the transport direction of the movable unit (7),
wherein the automation system comprises at least one further movable element, wherein the further movable element is moved along another second guide and/or about an axis, wherein at least one movement of the further movable element is synchronized with at least one movement of the movable unit (7), wherein the movement of the movable unit (7) is selected from the group of movements comprising
moving the movable unit (7) along the first guide;
moving an element of the movable unit (7) along or around an axis of movement on the movable unit (7).

18. The method according to one of claims 11 to 17, **characterized in that** the movement of a first movable unit (7) and the movement of at least one second movable unit (7) or at least one further movable element of the automation system, the machine or the vehicle are synchronized, wherein the synchronization is performed by the controller (1).

19. The method according to claim 18, **characterized in that** the synchronization is carried out by the data packets sent by the controller (1) containing a clock signal.

20. The method according to one of claims 1 to 19, **characterized in that** outgoing data packets from the controller (1) are sent within time windows with a constant clock and constant length.

## Revendications

1. Procédé de transmission de données dans un système de transmission de données de systèmes d'automatisation, des machines ou des véhicules, qui comprend au moins une unité de commande centrale (1), dans lequel les paquets de données sortants de l'unité de commande (1) sont envoyés à différents participants (4), dans lequel chaque paquet de données sortant de l'unité de commande (1) contient au moins une information d'adresse et des données à transmettre, dans lequel le système de transmission de données comprend au moins un trajet de transmission (2) sur lequel les paquets de données de différents participants (4) sont envoyés à l'unité de commande (1), **caractérisé en ce que**
l'unité de commande (1) est en liaison de données, par l'intermédiaire du trajet de transmission (2), avec plusieurs appareils de communication (3), dans lequel, à chacun des appareils de communication (3) correspondant un groupe (5) de participants (4), dans lequel chaque groupe de participants (5) est attribué à un seul appareil de communication (3), dans lequel
le groupe (5) de participants (4) et l'appareil de communication (3) correspondant sont reliés par un bus de données et dans lequel le groupe (5) de participants (4) est relié, par l'intermédiaire de l'appareil de communication (3) correspondant, au trajet de transmission (2), cet appareil de communication (3) lisant au moins l'information d'adresse d'un paquet de données sortant de l'unité de commande (1) et reconnaissant, à l'aide de l'information d'adresse du paquet de données sortant, si lui-même ou un participant (4) de son groupe de participants (5) est concerné, dans lequel le paquet de données sortant ou des parties de celui-ci sont transférées uniquement au groupe (5) de participants (4) lorsque cette condition est remplie, de sorte que le paquet de données sortant peut être traité par l'au moins un participant (4) adressé et dans lequel une réponse ou un paquet de données modifié ou un nouveau paquet de données d'au moins un participant (4) du groupe (5) est transmis à l'appareil de communication (3) correspondant et dans lequel l'appareil de communication (3) transmet la réponse ou le paquet de données modifié ou le nouveau paquet de données de l'au moins un participant (4) à l'unité de commande (1) par l'intermédiaire du trajet de transmission (2) dans un laps de temps, aucun autre des appareils de communication (3) ne transmettant des paquets de données à l'unité de commande (1) pendant ce laps de temps.

2. Procédé selon la revendication 1, **caractérisé en ce que** l'unité de commande (1) envoie des informations de fenêtres de temps pour la transmission de données sur le trajet de transmission (2) aux appareils de communication (3), dans lequel chaque appareil de communication (3) en déduit l'information concernant le laps de temps dans lequel il peut transmettre des paquets de données à l'unité de commande (1).

3. Procédé selon l'une des revendications 1 à 2, **caractérisé en ce que** l'unité de commande (1) envoie un signal d'horloge pour la synchronisation des appareils de communication (3) et/ou des participants (4) des appareils de communication (3).

4. Procédé selon l'une des revendications 1 à 3, **caractérisé en ce que** le paquet de données sortant contient des informations d'adresses d'au moins un appareil de communication (3) et des informations d'adresses d'au moins un participant (4) de cet appareil de communication (3).

5. Procédé selon la revendication 4, **caractérisé en ce que** les informations d'adresses des appareils de communication (3) sont des informations d'adresses uniques, de sorte que chaque appareil de communication (3) sur le trajet de transmission peut être adressé de manière unique par l'unité de commande (1).

6. Procédé selon l'une des revendications 1 à 5, **caractérisé en ce que** les participants (4) d'un groupe de participants (5) communiquent par l'intermédiaire d'une topologie linéaire ou annulaire avec l'appareil de communication (3).

7. Procédé selon l'une des revendications 1 à 6, **caractérisé en ce que** les appareils de communication (3) communiquent par l'intermédiaire d'une topologie de bus avec l'unité de commande (1).

8. Procédé selon l'une des revendications 1 à 7, **caractérisé en ce que**, dans l'unité de commande (1) sont représentés, sous forme logicielle, plusieurs maîtres du système ou bien ils existent sous la forme de cartes enfichables dans l'unité de commande (1), dans lequel chaque maître communique avec un seul appareil de communication (3).

9. Procédé selon l'une des revendications 1 à 8, **caractérisé en ce que** le trajet de transmission (2) existe, à partir de l'unité de commande (1), sous la forme d'un conducteur de type fibre optique ou conducteur électrique.

10. Procédé selon la revendication 9, **caractérisé en ce que** le conducteur bifurque en plusieurs conducteurs individuels (9), dans lequel les appareils de communication (3) se trouvent sur les conducteurs individuels (9) du trajet de transmission (2).

11. Procédé selon l'une des revendications 1 à 10, **caractérisé en ce qu'**au moins une unité mobile (7), qui comprend au moins un groupe (5) de participants (4), est déplacée le long d'au moins un élément de transmission (10), dans lequel l'unité mobile (7) reçoit des données de l'élément de transmission (10) et peut transmettre des données à l'élément de transmission (10), grâce au fait que l'élément de transmission (10) est conçu de sorte qu'un signal peut être transmis, à chaque position quelconque le long de son extension longitudinale, dans la direction de déplacement de l'unité mobile (7), entre l'élément de transmission (10) et l'unité mobile (7).

12. Procédé selon la revendication 11, **caractérisé en ce que** l'unité mobile (7) comprend l'appareil de communication (3) du groupe de participants (5).

13. Procédé selon l'une des revendications 11 ou 12, **caractérisé en ce que** l'élément de transmission (10) fait partie du trajet de transmission (2), grâce au fait que celui-ci est en liaison de données avec l'unité de commande (1).

14. Procédé selon la revendication 12, **caractérisé en ce que** plusieurs éléments de transmission (10) existent sous la forme de conducteurs électriques (9), qui couvrent respectivement une partie du trajet de déplacement de l'au moins une unité mobile (7), dans lequel chaque conducteur individuel (9) conduit les signaux de l'unité de commande (1) et dans lequel les unités mobiles (7) se trouvant au niveau des conducteurs individuels (9) reçoivent, par l'intermédiaire de leurs appareils de communication (3), des signaux provenant du conducteur individuel (9) et retournent des signaux à au moins un conducteur individuel (9), qui reviennent à l'unité de commande (1) par l'intermédiaire du conducteur individuel (9).

15. Procédé selon l'une des revendications 11 à 14, **caractérisé en ce que** les unités mobiles (7) sont des chariots de transport ou des porte-pièces mobiles d'un système de transport ou des composants mobiles de machines qui sont déplacés le long d'un guidage.

16. Procédé selon l'une des revendications 1 à 15, **caractérisé en ce que** les participants (4) d'un groupe de participants (5) et leur appareil de communication (3) sont montés conjointement sur une unité mobile (7) d'une installation d'automatisation, dans lequel l'installation d'automatisation comprend au moins une telle unité mobile (7), dans lequel les unités mobiles (7) sont déplacées le long d'un guidage commun, dans lequel, le long du guidage, se trouve au moins un élément de transmission (10), de sorte que, le long de l'extension de l'élément de transmission (10), dans la direction de transport des unités mobiles (7), des signaux peuvent être transmis entre l'élément de transmission (10) et les appareils de communication (3) de l'unité mobile (7), dans lequel chaque unité mobile (7) comprend au moins un moteur (73) pour le déplacement de l'unité mobile (7) le long du guidage.

17. Procédé selon l'une des revendications 1 à 16, **caractérisé en ce que** les participants (4) d'au moins un groupe de participants (5) et leur appareil de communication (3) sont montés conjointement sur une unité mobile (7) d'une installation d'automatisation, dans lequel au moins une telle unité mobile (7) est déplacée le long d'un premier guidage, dans lequel, le long du premier guidage, se trouve au moins un élément de transmission (10), de sorte que, le long de l'extension de l'élément de transmission (10), dans la direction de transport de l'unité mobile (7), des signaux peuvent être transmis entre l'élément de transmission (10) et l'appareil de communication (3) de l'unité mobile (7), dans lequel l'installation d'automatisation comprend au moins un autre élément mobile, dans lequel l'autre élément mobile est déplacé le long d'un autre deuxième guidage et/ou autour d'un axe,
dans lequel au moins un déplacement de l'autre élément mobile a lieu de manière synchronisée avec au moins un déplacement de l'unité mobile (7), dans lequel le déplacement de l'unité mobile (7) est sélectionné dans le groupe de déplacements suivant :
déplacement de l'unité mobile (7) le long du premier guidage ;
déplacement d'un élément de l'unité mobile (7) le long ou autour d'un axe de déplacement sur l'unité mobile (7).

18. Procédé selon l'une des revendications 11 à 17, **caractérisé en ce que** le déplacement d'une première unité mobile (7) et le déplacement d'au moins une deuxième unité mobile (7) ou d'au moins un autre élément mobile du système d'automatisation, de la machine ou du véhicule ont lieu de manière synchronisée, dans lequel la synchronisation est effectuée par l'unité de commande (1).

19. Procédé selon la revendication 18, **caractérisé en ce que** la synchronisation est effectuée grâce au fait que les paquets de données envoyés par l'unité de commande (1) contiennent un signal d'horloge.

20. Procédé selon l'une des revendications 1 à 19, **caractérisé en ce que** les paquets de données sortant de l'unité de commande (1) sont envoyés dans des fenêtres de temps avec une cadence constante et une longueur constante.
